(19)

Europäisches
Patentamt
European
Patent Office
Office européen
des brevets

(11)  **EP 2 509 317 A1**

(12)  # EUROPEAN PATENT APPLICATION
published in accordance with Art. 153(4) EPC

(43) Date of publication:
    **10.10.2012 Bulletin 2012/41**

(21) Application number: **10832800.6**

(22) Date of filing: **27.10.2010**

(51) Int Cl.:
    **H04N 7/30** (2006.01)    **H04N 7/32** (2006.01)

(86) International application number:
    **PCT/JP2010/006343**

(87) International publication number:
    **WO 2011/064944 (03.06.2011 Gazette 2011/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2009 JP 2009272178**

(71) Applicant: **NEC Corporation
Tokyo 108-8001 (JP)**

(72) Inventors:
• **CHONO, Keiichi
  Tokyo 108-8001 (JP)**

• **SENDA, Yuzo
  Tokyo 108-8001 (JP)**
• **TAJIME, Junji
  Tokyo 108-8001 (JP)**
• **AOKI, Hirofumi
  Tokyo 108-8001 (JP)**
• **SENZAKI, Kenta
  Tokyo 108-8001 (JP)**

(74) Representative: **Vossius & Partner
Siebertstrasse 4
81675 München (DE)**

(54)   **VIDEO CODING DEVICE AND VIDEO DECODING DEVICE**

(57)   To efficiently reduce contour and stair-step artifacts.

A video encoding device includes an inverse quantization means for inversely quantizing a quantization index to obtain a quantization representative value, an inverse frequency transformation means for inversely converting the quantization representative value obtained by the inverse quantization means to obtain a reconstructed image block, and a noise inject means for determining a pseudorandom noise injecting position based on information on extension of the reconstructed image block and injecting a pseudorandom noise into an image at the pseudorandom noise injecting position.

FIG. 1

EP 2 509 317 A1

**Description**

Technical Field

The present invention relates to a video encoding device and a video decoding device to which a video encoding technique for reducing contour and stair-step artifacts is applied.

Background Art

Typically, a video encoding device digitalizes an externally input animation signal and then performs an encode processing conforming to a predetermined video encoding system thereon, thereby generating encoded data or a bit stream.

The predetermined video encoding system may be ISO/IEC 14496-10 Advanced Video Coding (AVC) described in Non-Patent Literature 1. The joint Model system is known as a reference model of an AVC encoding device (which will be called typical video encoding device).

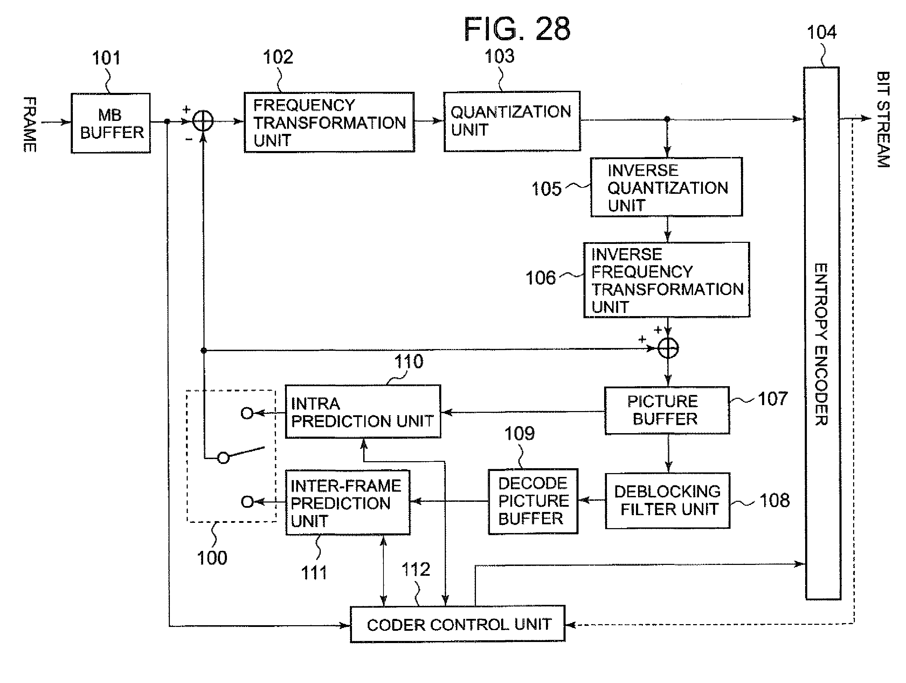

A structure and operations of the typical video encoding device for outputting a bit stream with each frame of a digitalized video as input will be described with reference to Fig. 28.

As shown in Fig. 28, the typical video encoding device includes a MB buffer 101, a frequency transformation unit 102, a quantization unit 103, an entropy encoder 104, an inverse quantization unit 105, an inverse frequency transformation unit 106, a picture buffer 107, a deblocking filter unit 108, a decode picture buffer 109, an intra prediction unit 110, an inter-frame prediction unit 111, a coder control unit 112 and a switch 100.

The typical video encoding device divides each frame into blocks called MB (Macro Block) having a 16x16 pixel size, further divides the MB into blocks having a $4 \times 4$ pixel size, and assumes the obtained 4x4 block being divided as a minimum configuration unit for encoding.

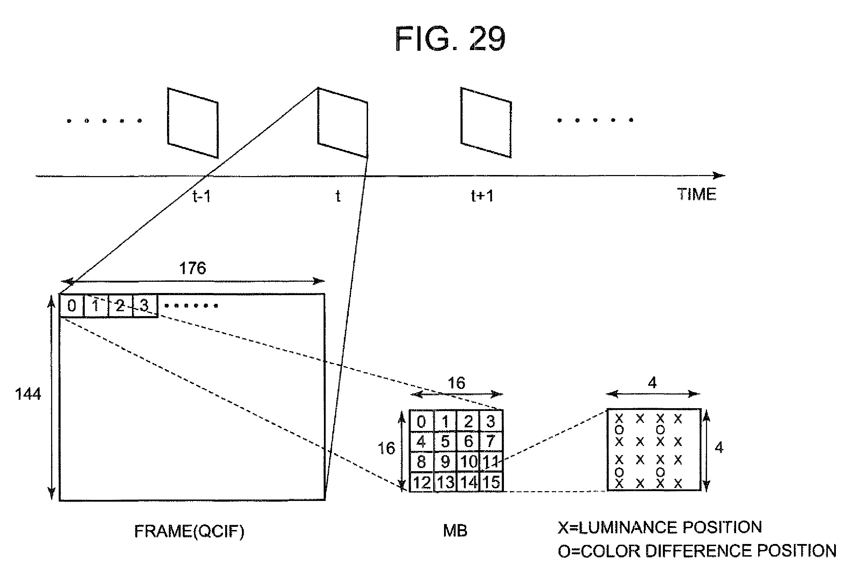

Fig. 29 is an explanatory diagram showing exemplary block division when a frame space resolution is QCIF (Quarter Common Intermediate Format). The operations of the respective units shown in Fig. 28 will be described below with only the luminance pixel value focused for brevity.

The MB buffer 101 stores therein pixel values of MBs to be encoded in an input image frame. The MB to be encoded will be called input MB.

For the input MB supplied from the MB buffer 101, a prediction signal supplied from the intra prediction unit 110 or the inter-frame prediction unit 111 via the switch 100 is reduced. The input MB with the prediction signal reduced will be called predictive error image block below.

The intra prediction unit 110 generates an intra prediction signal by use of a reconstructed image which is stored in the picture buffer 107 and has the same display time as a current frame. The MB encoded by the intra prediction signal will be called intra MB below.

The inter-frame prediction unit 111 generates an inter-frame prediction signal by use of a reference image which has a different display time from a current frame and is stored in the decode picture buffer 109. The MB encoded by the inter-frame prediction signal will be called inter MB below.

The frame encoded only by the intra MB will be called I frame. The frame encoded by both the intra MB and the inter MB will be called P frame. The frame encoded by the inter MB using two reference images at the same time, not only one reference image, for generating the inter-frame prediction signal will be called B frame.

The coder control unit 112 compares the intra prediction signal and the inter-frame prediction signal with the input MB stored in the MB buffer 101, selects a prediction signal having a low energy of the predictive error image block, and controls the switch 100. Information on the selected prediction signal is supplied to the entropy encoder 104.

The coder control unit 112 selects a base block size of integer DCT suitable for frequency transformation of the predictive error image block based on the input MB or predictive error image block. The integer DCT means frequency transformation by the base which is obtained by approximating the DCT base by an integer value in the typical video encoding device. The options of the base block size include three block sizes of $16 \times 16$, 8x8 and $4 \times 4$. As the pixel values of the input MB or predictive error image block are flatter, a larger base block size is selected. Information on the selected base size of the integer DCT is supplied to the frequency transformation unit 102 and the entropy encoder 104. The information on the selected predictive signal and the information on the selected base size of the integer DCT will be called auxiliary information below.

Further, the coder control unit 112 monitors the number of bits in a bit stream output by the entropy encoder 104 for encoding the frame at the target number of bits or less. Then, when the number of bits in the output bit stream is larger than the target number of bits, a quantization parameter for increasing a quantization step size is output, and inversely, when the number of bits in the output bit stream is smaller than the target number of bits, a quantization parameter for reducing the quantization step size is output. In this way, the output bit stream is encoded to approach the target number of bits.

The frequency transformation unit 102 frequency-transforms the predictive error image block at the selected base size of the integer DCT and thereby transforms it from the space domain into the frequency domain. The predictive error transformed into the frequency domain is called conversion coefficient. The frequency transformation may use orthogonal transform such as DCT (Discrete Cosine Transform) or Hadamard transform.

The quantization unit 103 quantizes a conversion coefficient at the quantization step size corresponding to the quantization parameter supplied from the coder control unit 112. A quantization index of the quantized conversion coefficient is also called revel.

The entropy encoder 104 entropy-encodes the auxiliary information and the quantization index to be output as bit string or bit stream.

The inverse quantization unit 105 and the inverse conversion unit 106 inversely quantize the quantization index supplied from the quantization unit 103 to obtain a quantization representative value for subsequent encoding, and further perform inverse frequency transformation thereon to return it to the original space domain. The predictive error image block returned to the original space domain will be called reconstructed predictive error image block below.

The picture buffer 107 stores therein a reconstructed image block in which a predictive signal is added to a reconstructed predictive error image block until all the MBs included in a current frame are encoded. The picture configured by the reconstructed image in the picture buffer 107 will be called reconstructed image picture below.

The deblocking filter unit 108 removes a block distortion from the reconstructed image picture stored in the picture buffer 107.

The decode picture buffer 109 stores therein a reconstructed image picture with a block distortion removed, which is supplied from the deblocking filter unit 108, as a reference image picture. The image of the reference image picture is utilized as a reference image for generating an inter-frame prediction signal.

The video encoding device shown in Fig. 28 generates a bit stream through the above processing.

Citation List

Patent Literature

PLT1: Japanese Patent Application National Publication (Laid-Open) No. 2007-503166 Publication
PLT2: Japanese Patent Application National Publication (Laid-Open) No. 2007-507169 Publication

Non Patent Literature

NPL1: ISO/IEC 14496-10 Advanced Video Coding
NPL2: L. G. Roberts, "Picture coding using pseudorandom noise", IRE Trans. on Information Theory, vol. IT-8, pp145-154, February, 1962
NPL3: G. Conklin and N. Gokhale, "Dithering 5-tap Filter for Inloop Deblocking", Joint Video Team (JVT) of IOS/IEC MPEG & ITU-T VCEG, JVT-C056, May, 2002
NPL4: Chono et al. , "A complexity Reduction Method for H.254 Intra Prediction Estimator Using the Characteristics of Hadamard Transform", IEICE Society papers, D-11-52, 2005

Summary of Invention

Technical Problem

A video compressed and extended at a low bit rate with the above technique generates a human-perceptible artifact. A block distortion or ringing distortion is a typical artifact occurring in a video compressed and extended based on block-based encoding.

Non-Patent Literature 2 proposes therein that a pseudorandom noise is injected into an image thereby to reduce artifacts in order to lower human visual sensitivity for the artifacts. Non-Patent Literature 3 proposes therein that an amount of random noise dithering according to the position of the pixel for an image block edge is added to a reconstructed image and an order of image block edges to which a deblocking filter is applied is rearranged in the deblocking filter disclosed in Non-Patent Literature 1 for block-based encoding.

Patent Literature 1 and Patent Literature 2 propose therein that an amount of additional noise associated with the luminance of part of a current image or an amount of additional noises associated with an additional noise of the pixel in a previous image is injected.

However, in each of the above literatures, a method for determining a pseudorandom noise injecting candidate position is not considered for efficiently reducing contour and stair-step artifacts which are problematic in compressing and extending a high-resolution video based on block-based encoding. Thus, with the technique described in each of the above literatures, contour and stair-step artifacts in a high-resolution video cannot be efficiently reduced. The efficiency includes not only the efficiency in reducing the contour and stair-step artifacts but also a calculation efficiency.

Thus, it is an object of the present invention to provide a video encoding device and a video decoding device capable of efficiently reducing contour and stair-step artifacts. Solution to Problem

A video encoding device according to the present invention includes: an inverse quantization means for inversely quantizing a quantization index to obtain a quantization representative value; an inverse frequency transformation means for inversely transforming the quantization representative value obtained by the inverse quantization means to obtain a reconstructed image block; and a noise inject means for determining a pseudorandom noise injecting position based on information on extension of the reconstructed image block and injecting a pseudorandom noise into an image at the pseudorandom noise injecting position.

A video decoding device according to the present invention includes: an entropy decode means for entropy-decoding a bit string to obtain a quantization index; a prediction means for calculating an intra prediction signal or an inter-frame prediction signal for an image block; an inverse quantization means for inversely quantizing the quantization index to obtain a quantization representative value; an inverse frequency transformation means for inversely transforming the quantization representative value obtained by the inverse quantization means to obtain a reconstructed predictive error image block; a reconstruction means for adding an intra prediction signal or an inter-frame prediction signal to the reconstructed predictive error image block obtained by the inverse frequency transformation means to obtain a reconstructed image block; and a noise inject means for determining a pseudorandom noise injecting position based on information on extension of the reconstructed image block and injecting a pseudorandom noise into an image at the pseudorandom noise injecting position.

A video encoding method according to the present invention includes: inversely quantizing a quantization index to obtain a quantization representative value; inversely transforming the obtained quantization representative value to obtain a reconstructed image block; and determining a pseudorandom noise injecting position based on information on extension of the reconstructed image block and injecting a pseudorandom noise into an image at the pseudorandom noise injecting position.

A video decoding method according to the present invention includes: entropy-decoding a bit string to obtain a quantization index; calculating an intra prediction signal or an inter-frame prediction signal for an image block; inversely quantizing the quantization index to obtain a quantization representative value; inversely transforming the obtained quantization representative value to obtain a reconstructed predictive error image block; adding an intra prediction signal or an inter-frame prediction signal to the reconstructed predictive error image block to obtain a reconstructed image block; and determining a pseudorandom noise injecting position based on information on extension of the reconstructed image block and injecting a pseudorandom noise into an image at the pseudorandom noise injecting position.

A video encoding program according to the present invention for causing a computer to execute: a processing of inversely quantizing a quantization index to obtain a quantization representative value; a processing of inversely transforming the obtained quantization representative value to obtain a reconstructed image block; and a processing of determining a pseudorandom noise injecting position based on information on extension of the reconstructed image block and injecting a pseudorandom noise into an image at the pseudorandom noise injecting position.

A video decoding program according to the present invention for causing a computer to execute: a processing of entropy-decoding a bit string to calculate a quantization index; a processing of calculating an intra prediction signal or an inter-frame prediction signal for an image block; a processing of inversely quantizing the quantization index to obtain a quantization representative value; a processing of inversely transforming the obtained quantization representative value to obtain a reconstructed predictive error image block; a processing of adding an intra prediction signal or an inter-frame prediction signal to the reconstructed predictive error image block to obtain a reconstructed image block; and a processing of determining a pseudorandom noise injecting position based on information on extension of the reconstructed image block and injecting a pseudorandom noise into an image at the pseudorandom noise injecting position.

Advantageous Effects of Invention

According to the present invention, positions where contour and stair-step artifacts are conspicuous can be accurately detected without comparing all the pixel values in an extended image and analyzing a variation of the pixel values. Thus, it is possible to provide a video encoding device and a video decoding device capable of efficiently reducing contour and stair-step artifacts in a high-resolution image.

Brief Description of Drawings

[Fig. 1] Fig. 1 is a block diagram showing a video encoding device according to a first embodiment.

[Fig. 2] Fig. 2 is an explanatory diagram for explaining a prediction type for a flat prediction signal.

[Fig. 3] Fig. 3 is an explanatory diagram for explaining a prediction type for a flat prediction signal.

[Fig. 4] Fig. 4 is an explanatory diagram showing a DCT base having a 8x8 block size.

[Fig. 5] Fig. 5 is an explanatory diagram showing a DCT base having a 4x4 block size.

[Fig. 6] Fig. 6 is an explanatory diagram showing a DCT base having a $16\times16$ block size.

[Fig. 7] Fig. 7 is an explanatory diagram showing an exemplary structure of an integer DCT having a $16\times16$ block size.

[Fig. 8] Fig. 8 is a block diagram showing a video encoding device according to a second embodiment.

[Fig. 9] Fig. 9 is a block diagram showing a video encoding device according to a third embodiment.

[Fig. 10] Fig. 10 is an explanatory diagram for explaining the operations of a deblocking filter unit.

[Fig. 11] Fig. 11 is an explanatory diagram for explaining the operations of the deblocking filter unit.

[Fig. 12] Fig. 12 is a flowchart showing the processing of determining bS.

[Fig. 13] Fig. 13 is a flowchart showing the processing of determining bS.

[Fig. 14] Fig. 14 is a block diagram showing a video decoding device according to a fourth embodiment.

[Fig. 15] Fig. 15 is a block diagram showing a video decoding device according to a fifth embodiment.

[Fig. 16] Fig. 16 is a block diagram showing a video decoding device according to a sixth embodiment.

[Fig. 17] Fig. 17 is a block diagram showing a structure in which a noise injector for actually calculating a variation of pixel values only for a reconstructed image block at a pseudorandom noise injecting candidate position and determining a pseudorandom noise injecting position based on a magnitude of the calculated variation of the pixel values is applied to the video encoding device according to the second embodiment.

[Fig. 18] Fig. 18 is a block diagram showing a structure in which a noise injector for actually calculating a variation of pixel values only for a reconstructed image block at a pseudorandom noise injecting candidate position and determining a pseudorandom noise injecting position based on a magnitude of the calculated variation of the pixel values is applied to the video encoding device according to the second embodiment.

[Fig. 19] Fig. 19 is a block diagram showing a structure in which a noise injector for actually calculating a variation of pixel values only for a reconstructed image block at a pseudorandom noise injecting candidate position and determining a pseudorandom noise injecting position based on a magnitude of the calculated variation of the pixel values is applied to the video decoding device according to the fifth embodiment.

[Fig. 20] Fig. 20 is a block diagram showing a structure in which a noise injector for actually calculating a variation of pixel values only for a reconstructed image block at a pseudorandom noise injecting candidate position and determining a pseudorandom noise injecting position based on a magnitude of the calculated variation of the pixel values is applied to the video encoding device according to the third embodiment.

[Fig. 21] Fig. 21 is a block diagram showing a structure in which a noise injector for actually calculating a variation of pixel values only for a reconstructed image block at a pseudorandom noise injecting candidate position and determining a pseudorandom noise injecting position based on a magnitude of the calculated variation of the pixel values is applied to the video decoding device according to the sixth embodiment.

[Fig. 22] Fig. 22 is an explanatory diagram for explaining how to reset a pseudorandom noise generator.

[Fig. 23] Fig. 23 is a block diagram showing an exemplary structure of an information processing system capable of realizing the functions of a video encoding device and a video decoding device according to the present invention.

[Fig. 24] Fig. 24 is a block diagram showing a main structure of the video encoding device according to the present invention.

[Fig. 25] Fig. 25 is a block diagram showing a main structure of the video decoding device according to the present invention.

[Fig. 26] Fig. 26 is a flowchart showing the processing by the video encoding device according to the present invention.

[Fig. 27] Fig. 27 is a flowchart showing the processing by the video decoding device according to the present invention.

[Fig. 28] Fig. 28 is a block diagram showing a structure of a typical video encoding device.

[Fig. 29] Fig. 29 is an explanatory diagram showing exemplary block division.

Description of Embodiments

First embodiment

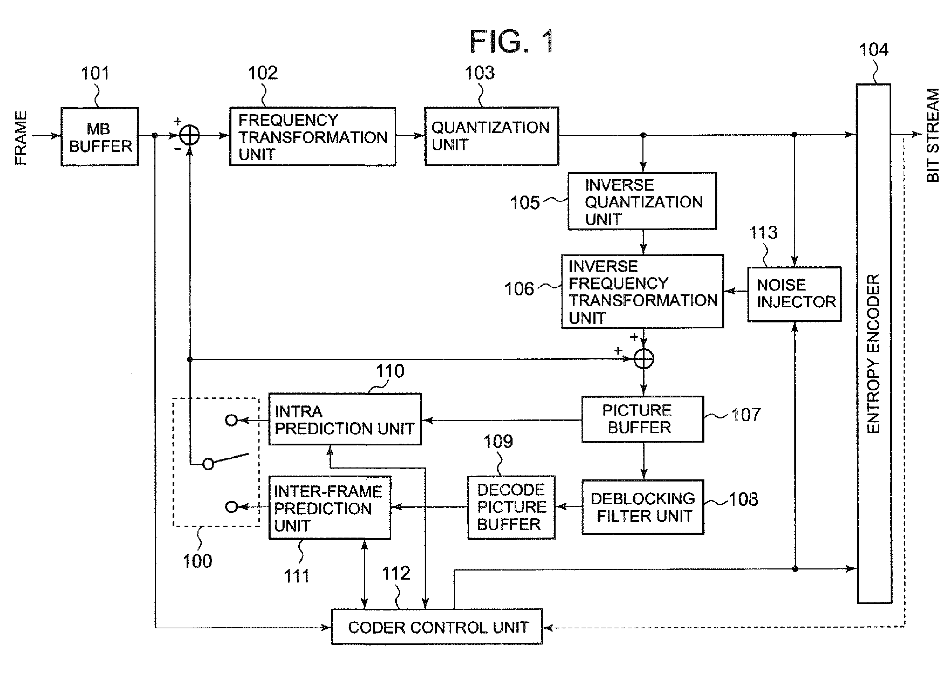

Fig. 1 is a block diagram showing a first embodiment of the present invention, which shows a video encoding device for determining a pseudorandom noise injecting candidate position based on information on a currently-extended reconstructed image block and injecting a pseudorandom noise into a reconstructed predictive error image block.

As shown in Fig. 1, the video encoding device according to the present embodiment includes a noise injector 113 in addition to a MB buffer 101, a frequency transformation unit 102, a quantization unit 103, an entropy encoder 104, an inverse quantization unit 105, an inverse frequency transformation unit 106, a picture buffer 107, a deblocking filter unit 108, a decode picture buffer 109, an intra prediction unit 110, an inter-frame prediction unit 111, a coder control unit 112 and a switch 100.

The video encoding device according to the present embodiment is different from the typical video encoding device shown in Fig. 28 in that the noise injector 113 is provided and the output of the noise injector 113 is supplied to the inverse frequency transformation unit 106. In the following description, particularly the operations of the noise injector 113 and the inverse frequency transformation unit 106, which are characteristic of the video encoding device according to the present embodiment, will be described in detail.

The MB buffer 101 stores therein pixel values of MBs to be encoded in an input image frame.

A prediction signal supplied from the intra prediction unit 110 or the inter-frame prediction unit 111 via the switch 100 is reduced from the input MB supplied from the MB buffer 101.

A prediction signal supplied from the intra prediction unit 110 or the inter-frame prediction unit 111 via the switch 100 is reduced from the input MB supplied from the MB buffer 101.

The intra prediction unit 110 generates an intra prediction signal by use of a reconstructed image which is stored in the picture buffer 107 and has the same display time as a current frame. Information on the intra prediction includes an intra prediction mode indicating a block size for intra prediction, and an intra prediction direction indicating a direction therefor.

For the intra prediction, there are employed three block sizes of intra prediction modes of Intra_4x4, Intra_$8\times8$ and Intra_$16\times16$ as described in 8.3.1 to 8.3.3 in Non-Patent Literature 1.

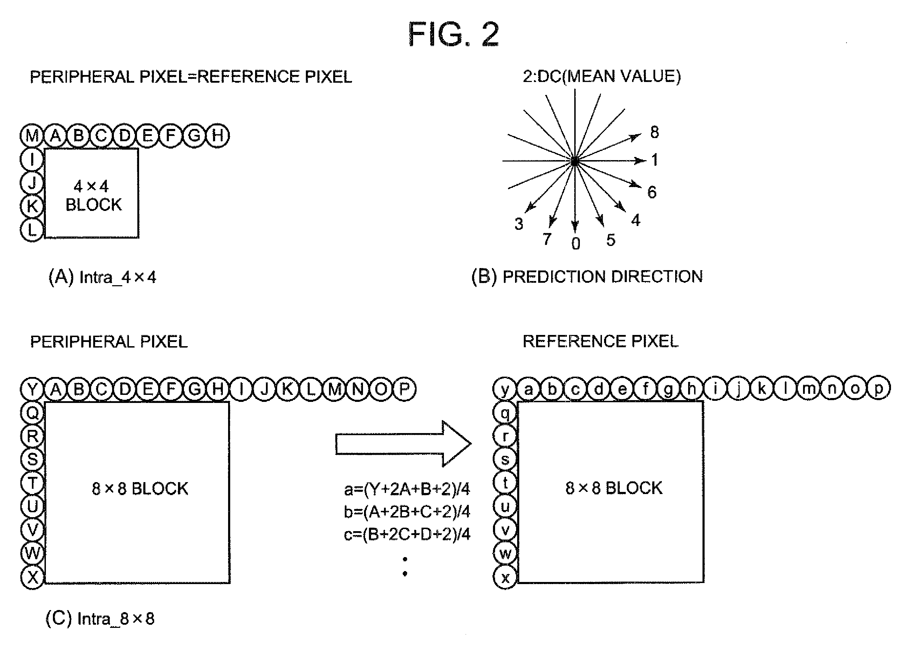

With reference to Figs. 2 (A) and 2 (C), it can be seen that Intra_$4\times4$ and Intra_$8\times8$ are for the intra predictions with the 4x4 block size and the 8x8 block size, respectively. The circles (O) indicate reference pixels for the intra prediction, that is, a reconstructed image stored in the picture buffer 107.

For the intra prediction with Intra_$4\times4$, with the peripheral pixels of a reconstructed image as reference pixels, the reference pixels are padded (extrapolated) in nine directions shown in Fig. 2(B) so that a prediction signal is formed. For the intra prediction with Intra_$8\times8$, with the peripheral pixels of the reconstructed image smoothed by lowpass filters (1/2, 1/4, 1/2) shown immediately below the right arrow in Fig. 2(C) as the reference pixels, the reference pixels are extrapolated in nine directions shown in Fig. 2(B) so that a prediction signal is formed.

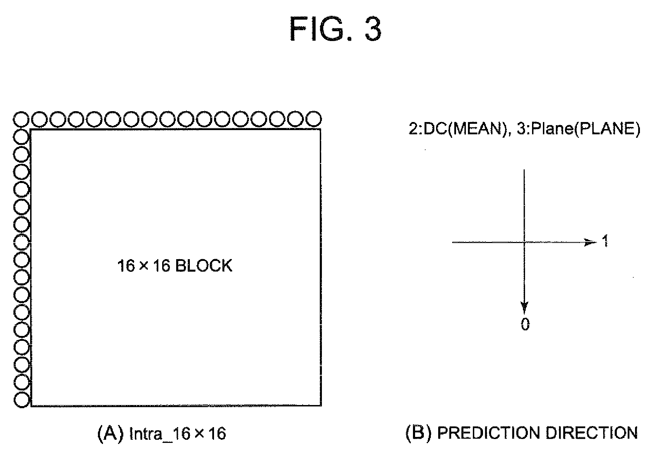

With reference to Fig. 3 (A), it can be seen that Intra _$16\times16$ is the intra prediction with the $16\times16$ block size. Similar to the example shown in Fig. 2, the circles (O) in Fig. 3 indicate reference pixels for the intra prediction, that is, a reconstructed image stored in the picture buffer 107. For the intra prediction with Intra $16\times16$, with the peripheral pixels of the reconstructed image as the reference pixels, the reference pixels are extrapolated in four directions shown in Fig. 3(B) so that a prediction signal is formed.

The block size for the intra prediction will be called intra prediction mode below. The direction of extrapolation will be called intra prediction direction.

As shown in Non-Patent Literature 4, a significant conversion coefficient is generated only for a specific component for Hadamard transform of a prediction signal in the intra prediction directions for DC (See "2" in Fig. 2 and Fig. 3(B)), horizontal (see Fig. 2 and "1" in Fig. 3(B)) and vertical (see Fig. 2 and "0" in Fig. 3 (B)), respectively. Specifically, a significant conversion coefficient only for the DC, a significant conversion coefficient only for the DC and the vertical component AC, and a significant conversion coefficient only for the DC and the horizontal component AC are for the DC intra prediction direction, the horizontal intra prediction direction and the vertical intra prediction direction, respectively.

That a significant conversion coefficient occurs only for a specific component indicates that the variation of the image is zero (that is, the prediction signal is flat) in the DC intra prediction direction, the variation of the image in the horizontal direction is zero (that is, the prediction signal is flat in the horizontal direction) in the horizontal intra prediction direction, and the variation of the image in the vertical direction is zero (that is, the prediction signal is flat in the vertical direction) in the vertical intra prediction direction.

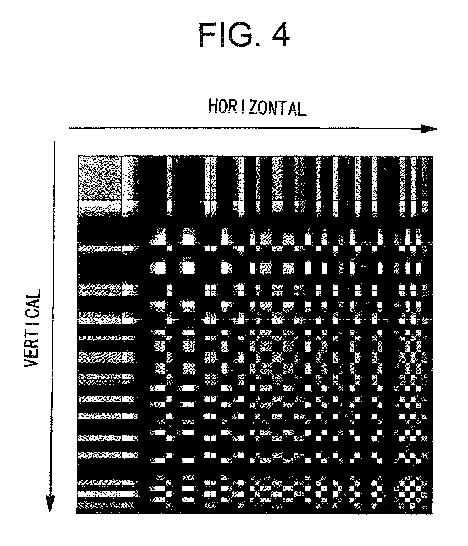

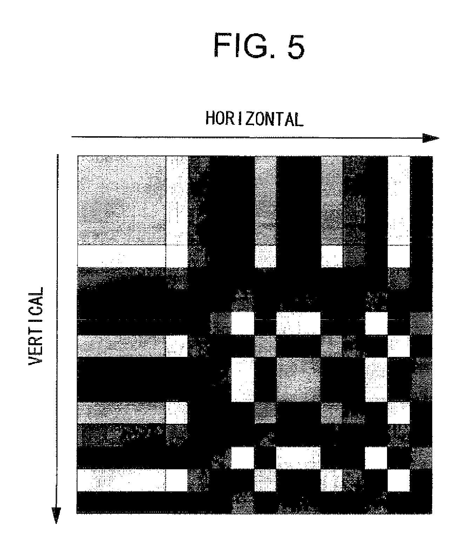

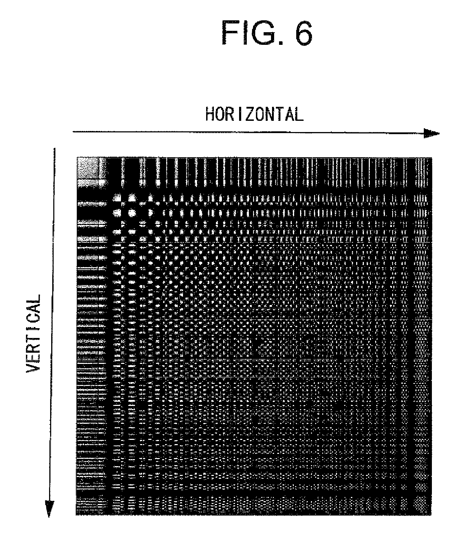

As is clear from the exemplary DCT, base with the $8\times8$ block size shown in the explanatory diagram of Fig. 4, also for the integer DCT of the prediction signal in the intra prediction direction, the variation of the image is zero in the DC intra prediction direction, the variation of the image in the horizontal direction is zero in the horizontal intra prediction direction, and the variation of the image in the vertical direction is zero in the vertical intra prediction direction. As can be seen from the DCT base with the $4\times4$ block size and the DCT base with the $16\times16$ block size shown in Fig. 5 and Fig. 6, respectively, similar to the DCT base with the 8x8 block size, the variation of the image is zero in the DC intra prediction direction, the variation of the image in the horizontal direction is zero in the horizontal intra prediction direction, and the variation of the image in the vertical direction is zero in the vertical intra prediction direction also for the block size $4\times4$ or $16\times16$.

From the above, it can be seen that the intra prediction directions for DC, horizontal, vertical and Plane (see 3" in Fig. 3 (B)) are the types of flat prediction. That is, it can be seen that a magnitude of the variation of the reconstructed image can be estimated depending on an intra prediction direction.

The coder control unit 112 compares a prediction signal which is a combination of a respective intra prediction mode and its intra prediction direction, with an input MB, and assumes a prediction signal having a low energy of the predictive error image block as an intra prediction signal.

The inter-frame prediction unit 111 generates an inter-frame prediction signal by use of a reference image which has a different display time from a current frame and is stored in the decode picture buffer 109. Information on the inter-frame prediction may be information on a reference picture index or a motion vector.

The coder control unit 112 compares an intra prediction signal and an inter-frame prediction signal with an input MB stored in the MB buffer 101, selects a prediction signal having a low energy of the predictive error image block, and controls the switch 100. Information on the selected prediction signal is supplied to the entropy encoder 104.

When the prediction signal having a low energy of the predictive error image block is an intra prediction signal, the information on the selected prediction signal includes the intra prediction mode and the intra prediction direction.

The coder control unit 112 selects a base block size of the integer DCT suitable for frequency transformation of the predictive error image block based on the input MB or the predictive error image block. The selected base size of the integer DCT is supplied to the frequency transformation unit 102 and the entropy encoder 104. Typically, as the pixel values of the input MB or the predictive error image block are flatter, a larger base block size is selected. In other words, a reconstructed image is flat in a reconstructed image block having a larger base block size. When the prediction signal having a low energy of the predictive error image block is an intra prediction signal, the selected base size of the integer DCT is the same as the block size in the intra prediction mode.

The coder control unit 112 monitors the number of bits in the bit stream output from the entropy encoder 104 in order to encode the frames at the target number of bits or less. When the number of bits in the output bit stream is larger than the target number of bits, a quantization parameter for increasing a quantization step size is output, and inversely when the number of bits in the output bit stream is smaller than the target number of bits, a quantization parameter for reducing the quantization step size is output. In this way, the output bit stream is encoded to approach the target number of bits.

The frequency transformation unit 102 frequency-transforms a predictive error image block at the selected base size of the integer DCT, and transforms it from the space domain to the frequency domain.

The quantization unit 103 quantizes a conversion coefficient at the quantization step size corresponding to the quantization parameter supplied from the coder control unit 112.

As can been seen from the DCT base having the $8 \times 8$ block size exemplified in Fig. 4, attention is paid to that as the AC base is of a higher frequency (as the base is in the right arrow or down arrow direction), the variation is larger. It can be seen that the variation of the pixel values is estimated to be small in a reconstructed image having a pattern with a small number of significant AC quantization indexes. That is, it can be seen that for the predictive error image block having a pattern with a small number of significant AC quantization indexes, its reconstructed image is flat.

The entropy encoder 104 entropy-encodes the information on the selected prediction signal, the base size of the integer DCT, and the quantization index, and outputs as bit string or bit stream.

The inverse quantization unit 105 inversely quantizes the quantization index supplied from the quantization unit 103 for subsequent encoding. The inversely-quantized quantization index is called quantization representative value.

The noise injector 113 monitors the information on the prediction signal, the base size of the integer DCT and the quantization index for the predictive error image block supplied to the entropy encoder 104.

The noise injector 113 estimates the variation of the pixel values without comparing all the pixel values in the reconstructed image, based on the information on the selected prediction signal, the base size of the integer DCT, the quantization index or any combination thereof, and determines a pseudorandom noise injecting candidate position. For example, the variation of the pixel values in the corresponding reconstructed image block is small for the predictive error image block having a pattern with the flat prediction type, the large base size of the integer DCT, and a small number of significant AC quantization indexes. Thus, such a predictive error image block is determined as a pseudorandom noise injecting candidate position, and otherwise is determined as a pseudorandom noise non-injecting candidate position.

A reconstructed image block corresponding to a predictive error image block with a flat prediction type, a reconstructed image block corresponding to a predictive error image block with a large base size of the integer DCT (a larger base size than a predetermined size), a reconstructed image block corresponding to a predictive error image block having a pattern with a small number of significant AC quantization indexes, a reconstructed image block corresponding to a predictive error image block with a flat prediction type and a large base size of the integer DCT, a reconstructed image block corresponding to a predictive error image block having a pattern with a large base size of the integer DCT and a small number of significant AC quantization indexes, or a reconstructed image block corresponding to a predictive error image block having a pattern with a flat prediction and a small number of significant AC quantization indexes may be estimated to have a small variation of the pixel values (the pattern with a small number of significant AC quantization indexes may use a pattern in which a significant AC quantization index is present only for a predetermined low frequency component or a pattern in which significant AC quantization indexes are roughly present for all the frequency components).

The noise injector 113 generates a pseudorandom noise n (i) for a pseudorandom noise injecting candidate position. That is, in the present embodiment, the pseudorandom noise injecting candidate position corresponds to a pseudorandom noise injecting position. The pseudorandom noise n(i) may be generated based on the linear congruent method by Formula (1), for example.

$$N(i) = (a \times n(i-1) + b) \% c \qquad (1)$$

it where a, b and c are parameters for determining a cycle of the pseudorandom noise, and a>0, b>0, a≤c, and b<c are assumed. X%y indicates a processing of returning the remainder obtained by dividing x by y.

The noise injector 113 generates a pseudorandom noise of zero for a pseudorandom noise non-injecting candidate position. The generation of the pseudorandom noise of zero indicates that a pseudorandom noise is not injected into the predictive error image block.

The inverse conversion unit 106 inversely frequency-transforms a quantization representative value, further injects a pseudorandom noise supplied from the noise injector 113 therein, and returns it to the original space domain. A specific processing per block size of the intra prediction mode will be described below. The processing for inverse conversion and inverse quantization are integrated in the AVC described in Non-Patent Literature 1, and thus an explanation including the inverse quantization will be made.

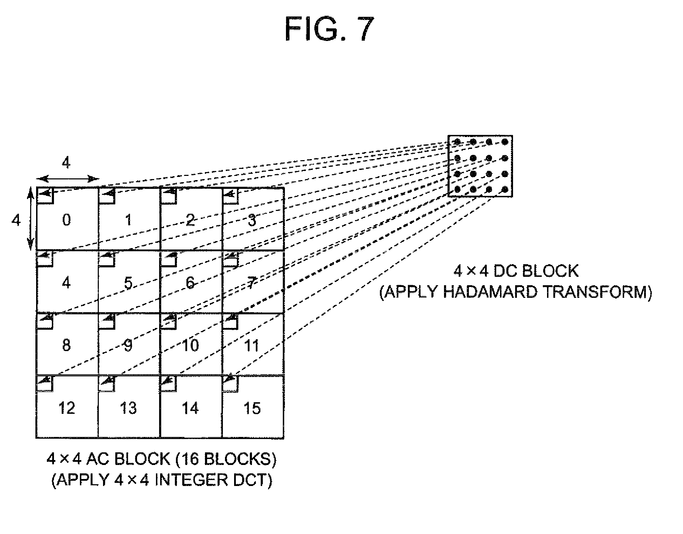

The inverse conversion and the inverse quantization in the case of Intra_16×16 will be described first. That is, in the case of Intra_16x16, there will be described an operation of inversely frequency-transforming a quantization representative value and then injecting a pseudorandom noise from the noise injector 113. In the present embodiment, it is assumed that as shown in Fig. 7, the integer DCT, with the 16×16 block size is configured in a combination of the integer DCT with the 4×4 block size and the Hadamard transform with the 4x4 block size.

The inverse frequency transformation of the 4×4 DC blocks in Intra_16×16 is defined by Formula (2) assuming that the quantization index is $L16 = \{116_{00}...116_{33}\}$ and the inverse conversion coefficient is $F16 = \{f16_{00} \cdots f16_{33}\}$.

[Equation 1]

$$F16 = \begin{pmatrix} 1 & 1 & 1 & 1 \\ 1 & 1 & -1 & -1 \\ 1 & -1 & -1 & 1 \\ 1 & -1 & 1 & -1 \end{pmatrix} \begin{pmatrix} 116_{00} & 116_{01} & 116_{02} & 116_{03} \\ 116_{10} & 116_{11} & 116_{12} & 116_{13} \\ 116_{20} & 116_{21} & 116_{22} & 116_{23} \\ 116_{30} & 116_{31} & 116_{32} & 116_{33} \end{pmatrix} \begin{pmatrix} 1 & 1 & 1 & 1 \\ 1 & 1 & -1 & -1 \\ 1 & -1 & -1 & 1 \\ 1 & -1 & 1 & -1 \end{pmatrix} \qquad \cdots (2)$$

The inverse quantization of the 4x4 DC blocks in Intra_16×16 is defined by Formula (3) assuming that the quantization parameter is qp and the output of the inverse quantization is $dcY_{ij}$. LevelScale (m, i, j) is expressed by Formula (4) and M is expressed by Formula (5).

[Equation 2]

$$dcY_{ij} = \begin{cases} (16 \times f16_{ij} \times LevelScale(qp\%6, 0, 0)) << (qp/6 - 6) & \cdots & if(qp \geq 36) \\ (16 \times f16_{ij} \times LevelScale(qp\%6, 0, 0)) << (qp/6 - 6) & \cdots & otherwise \end{cases} \qquad \cdots (3)$$

[Equation 3]

$$\text{LevelScale}(m,i,j) = \begin{cases} M_{m,0} & \text{if}(i,j) = \{(0,0),(0,2),(2,0),(2,2)\} \\ M_{m,1} & \text{else if}(i,j) = \{(1,1),(1,3),(3,1),(3,3)\} \\ M_{m,2} & \text{otherwise} \end{cases} \qquad \cdots (4)$$

[Equation 4]

$$M = \begin{bmatrix} 10 & 16 & 13 \\ 11 & 18 & 14 \\ 13 & 20 & 16 \\ 14 & 23 & 18 \\ 16 & 25 & 20 \\ 18 & 29 & 23 \end{bmatrix} \qquad \cdots (5)$$

Further, the output of the inverse quantization is DC of the 4x4 AC blocks in Intra_16×16 as shown in Fig. 4. The 4x4 block inverse conversion/inverse quantization described later is applied to each 4×4 AC block.

In the 4×4 AC blocks in Intra_16×16, inverse quantization is performed and then inverse conversion is applied. Assuming that the 4x4 block coordinate in the MB is (i, j), the quantization index is $L=\{l_{00}...l_{33}\}$, and the quantization representative value is $d_{ij}$, the inverse quantization of the 4×4 AC blocks is defined by Formula (6).

[Equation 5]

$$d_{ij} = \begin{cases} dcY_{ij} & \cdots \text{ if}(\text{Mode} = \text{Intra16} \ \& \ i == 0 \ \& \ j == 0) \\ (16 \times l_{ij} \times \text{LevelScale}(qp\%6,i,j)) << (qp/6-4) & \cdots \text{ else if}(QP \geq 24) \\ ((16 \times l_{ij} \times \text{LevelScale}(qp\%6,i,j)) + 2^{3-qp/6}) >> (4-qp/6) & \cdots \text{ otherwise} \end{cases} \qquad \cdots (6)$$

Subsequently, assuming that the inverse conversion coefficient is $C=\{C_{00}...C_{33}\}$, the inverse conversion of the 4x4 blocks is defined by Formula (7).

[Equation 6]

$$C = \begin{pmatrix} 1 & 1 & 1 & 1/2 \\ 1 & 1/2 & -1 & -1 \\ 1 & -1/2 & -1 & 1 \\ 1 & -1 & 1 & -1/2 \end{pmatrix} \begin{pmatrix} d_{00} & d_{01} & d_{02} & d_{03} \\ d_{10} & d_{11} & d_{12} & d_{13} \\ d_{20} & d_{21} & d_{22} & d_{23} \\ d_{30} & d_{31} & d_{32} & d_{33} \end{pmatrix} \begin{pmatrix} 1 & 1 & 1 & 1 \\ 1 & 1/2 & -1/2 & -1 \\ 1 & -1 & -1 & 1 \\ 1/2 & -1 & 1 & -1/2 \end{pmatrix} \qquad \cdots (7)$$

As expressed in Formula (8), the inverse conversion coefficient C is added with the pseudorandom noise N= $\{n_{00}...n_{33}\}$ (n (i) in Formula (1) is assumed to be rearranged in a proper rule) and is normalized to obtain a reconstructed predictive error image block PD$\{pd_{00}...pd_{33}\}$. That is, the inverse conversion coefficient is returned to the original space

domain.

$$pd_{ij} = (C_{ij} + (n_{ij} \% 64) + 32) >> 6 \qquad (8)$$

As indicated in Formula (8), the remainder obtained by the division by 64 is added such that the absolute value of the influence intensity of the pseudorandom noise is 1 pixel or less. The absolute value of the influence intensity of the pseudorandom noise is assumed as 1 pixel or less so that a reduction in PSNR (Peak Signal to Noise Ratio) due to the injected pseudorandom noise can be restricted.

The inverse conversion and the inverse quantization in the case of Intra_8×8 will be described below. That is, there will be described an operation of inversely frequency-transforming a quantization representative value and injecting a pseudorandom noise from the noise injector 113 in the case of Intra_8×8.

The inverse quantization in Intra_8×8 is defined by Formula (9) assuming that the quantization index is L8= {l8$_{00}$...l8$_{77}$} and the quantization representative value is D8={d8$_{00}$···d8$_{77}$}. LevelScale8(m, i, j) is expressed by Formula (10) and M8 is expressed by Formula (11).

[Equation 7]

$$d8_{ij} = \begin{cases} (16 \times l8_{ij} \times LevelScale8(qp\%6, i, j)) << (qp/6 - 6) & \cdots \text{ if}(qp \geq 36) \\ 16 \times l8_{ij} \times LevelScale8(qp\%6, i, j) + 2^{5-qp/6}) >> (6 - qp/6) & \cdots \text{ otherwise} \end{cases} \cdots(9)$$

[Equation 8]

$$LevelScale8(m, i, j) = \begin{cases} M8_{m,0} & \text{for } (i\%4, j\%4) == (0,0) \\ M8_{m,1} & \text{for } (i\%2, j\%2) == (1,1) \\ M8_{m,2} & \text{for } (i\%4, j\%4) == (2,2) \\ M8_{m,3} & \text{for } (i\%4, j\%2) == (0,1) \text{ or } (i\%2, j\%4) == (1,0) \\ M8_{m,4} & \text{for } (i\%4, j\%4) == (0,2) \text{ or } (i\%4, j\%4) == (2,0) \\ M8_{m,6} & \text{otherwise} \end{cases} \cdots(10)$$

[Equation 9]

$$M8 = \begin{bmatrix} 20 & 18 & 32 & 19 & 25 & 24 \\ 22 & 19 & 35 & 21 & 28 & 26 \\ 26 & 23 & 42 & 24 & 33 & 31 \\ 28 & 25 & 45 & 26 & 35 & 33 \\ 32 & 28 & 51 & 30 & 40 & 38 \\ 36 & 32 & 58 & 34 & 46 & 43 \end{bmatrix} \cdots(11)$$

Subsequently, assuming that the inverse conversion coefficient is C={C$_{00}$···C$_{77}$}, the inverse conversion of Intra_8×8 is defined by Formula (12). T8 is expressed as Formula (13).
$$C8 = T8^t D8 T8 \qquad (12)$$

[Equation 10]

$$T8 = 1/8 \begin{pmatrix} 8 & 8 & 8 & 8 & 8 & 8 & 8 & 8 \\ 12 & 10 & 6 & 3 & -3 & -6 & -10 & -12 \\ 8 & 4 & -4 & -8 & -8 & -4 & 4 & 8 \\ 10 & -3 & -12 & -6 & 6 & 12 & 3 & -10 \\ 8 & -8 & -8 & 8 & 8 & -8 & -8 & 8 \\ 6 & -12 & 3 & 10 & -10 & -3 & 12 & -6 \\ 4 & -8 & 8 & -4 & -4 & 8 & -8 & 4 \\ 3 & -6 & 10 & -12 & 12 & -10 & 6 & -3 \end{pmatrix} \qquad \cdots (13)$$

As expressed in Formula (14), the inverse conversion coefficient C is added with the pseudorandom noise N= $\{n_{00}...n_{77}\}$ (n (i) in Formula (1) is assumed to be rearranged in a proper rule) and is normalized to obtain a reconstructed predictive error image block PD$\{pd_{00}-pd_{77}\}$. That is, the inverse conversion coefficient is returned to the original space domain.
$$pd_{ij} = (c8_{ij} + (n_{ij} \% 64) + 32 >> 6 \qquad (14)$$

The inverse conversion and the inverse quantization in the case of Intra_4x4 will be described below. That is, there will be described an operation of inversely frequency-transforming a quantization representative value and injecting a pseudorandom noise from the noise injector 113 in the case of Intra_4x4.
Assuming that the quantization index is L=$\{l_{00}\cdots l_{33}\}$ and the Quantization representative value is $d_{ij}$, the inverse quantization of Intra_4×4 is defined by Formula (15).
[Equation 11]

$$d_{ij} = \begin{cases} (16 \times l_{ij} \times \text{LevelScale}(qp\%6, i, j)) << (qp/6 - 4) & \cdots & \text{if}(QP \geq 24) \\ ((16 \times l_{ij} \times \text{LevelScale}(qp\%6, i, j) + 2^{3-qp/6}) >> (4 - qp/6) & \cdots & \text{otherwise} \end{cases} \qquad \cdots (15)$$

Subsequently, assuming that the inverse conversion coefficient is C=$\{C_{00}...C_{33}\}$, the inverse conversion of the 4x4 block is defined by Formula (16).
[Equation 12]

$$C = \begin{pmatrix} 1 & 1 & 1 & 1/2 \\ 1 & 1/2 & -1 & -1 \\ 1 & -1/2 & -1 & 1 \\ 1 & -1 & 1 & -1/2 \end{pmatrix} \begin{pmatrix} d_{00} & d_{01} & d_{02} & d_{03} \\ d_{10} & d_{11} & d_{12} & d_{13} \\ d_{20} & d_{21} & d_{22} & d_{23} \\ d_{30} & d_{31} & d_{32} & d_{33} \end{pmatrix} \begin{pmatrix} 1 & 1 & 1 & 1 \\ 1 & 1/2 & -1/2 & -1 \\ 1 & -1 & -1 & 1 \\ 1/2 & -1 & 1 & -1/2 \end{pmatrix} \quad \cdots (16)$$

As expressed in Formula (17), the inverse conversion coefficient C is added with the pseudorandom noise N= $\{n_{00}...n_{33}\}$ and is normalized to obtain a reconstructed predictive error image block PD$\{pd_{00}...pd_{33}\}$. That is, the inverse conversion coefficient is returned to the original space domain.
$$pd_{ij} = (c_{ij} + (n_{ij} \% 64) + 32) >> 6 \qquad (17)$$

The picture buffer 107 stores therein a reconstructed image block in which a prediction signal is added to a reconstructed predictive error image block until all the MBs included in a current frame are encoded.
The deblocking filter unit 108 removes a block distortion from the reconstructed image picture stored in the picture buffer 107.
The decode picture buffer 109 stores therein, as a reference image picture, a reconstructed image picture with a block distortion removed, which is supplied from the deblocking filter 108. The image of the reference image picture is utilized as a reference image for generating an inter-frame prediction signal.
The video encoding device according to the present embodiment generates a bit stream through the above processing.
The video encoding device according to the present embodiment determines a pseudorandom noise injecting candidate position for efficiently reducing contour and stair-step artifacts by estimating a magnitude of the variation of pixel values in a reconstructed image based on information on extension, without comparing all the pixel values in a reconstructed image picture and analyzing the variation of the pixel values. Thus, the video encoding device according to the present embodiment can efficiently reduce contour and stair-step artifacts in a high-resolution video.

Second embodiment

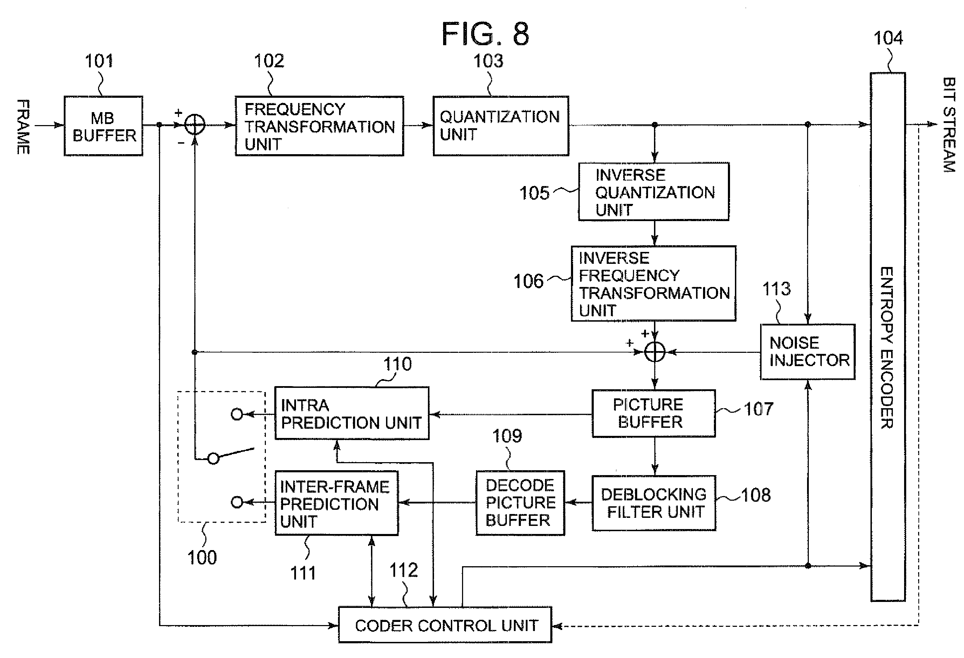

Fig. 8 is a block diagram showing a second embodiment according to the present invention, which shows a video encoding device for determining a pseudorandom noise injecting candidate position based on information on extension of a reconstructed image block and injecting a pseudorandom noise not into a reconstructed predictive error image block but into a reconstructed image block.
As shown in Fig. 8, the video encoding device according to the present embodiment includes a noise injector 113 in addition to the a buffer 101, a frequency transformation unit 102, a quantization unit 103, an entropy encoder 104, an inverse quantization unit 105, an inverse frequency transformation unit 106, a picture buffer 107, a deblocking filter unit 108, a decode picture buffer 109, an intra prediction unit 110, an inter-frame prediction unit 111, a coder control unit 112 and a switch 100.
The present embodiment is different from the first embodiment in that a pseudorandom noise supplied from the noise injector 113 is added to the output of the inverse frequency transformation unit 106. However, the processing of the respective units in the video encoding device according to the present embodiment are substantially the same as the processing of the respective units in the video encoding device according to the first embodiment shown in Fig. 1, and thus the explanation of the operations of the respective units will be omitted.

Third embodiment

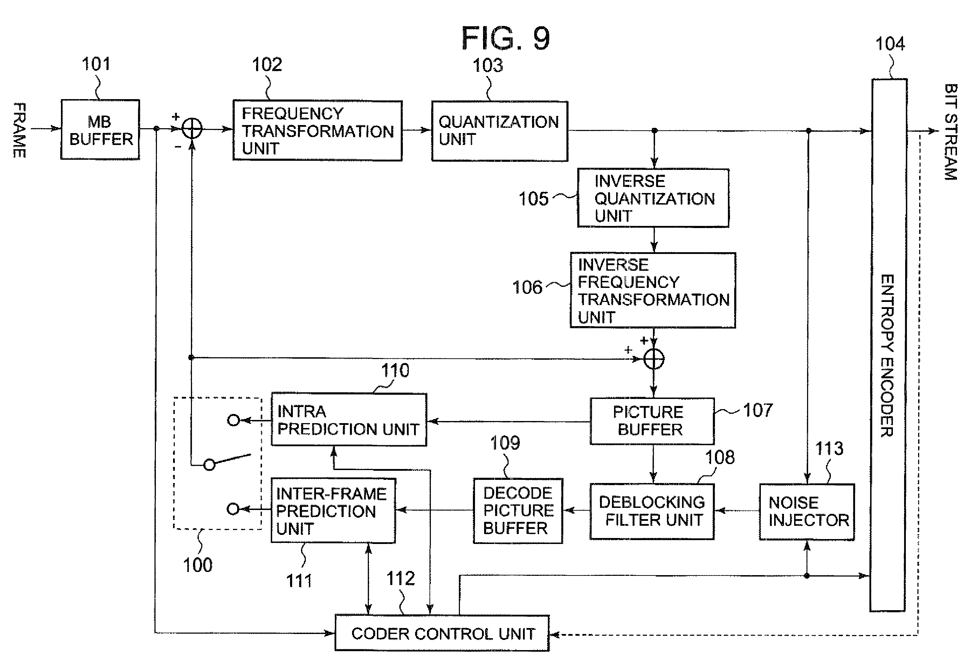

Fig. 9 is a block diagram showing a third embodiment according to the present invention, which shows a video encoding device for determining a pseudorandom noise injecting candidate position based on information on extension of a reconstructed image block and injecting a pseudorandom noise into a reconstructed image picture.
As shown in Fig. 9, the video encoding device according to the present embodiment includes a noise injector 113 in addition to a MB buffer 101, a frequency transformation unit 102, a quantization unit 103, an entropy encoder 104, an inverse quantization unit 105, an inverse frequency transformation unit 106, a picture buffer 107, a deblocking filter unit 108, a decode picture buffer 109, an intra prediction unit 110, an inter-frame prediction unit 111, a coder control unit 112 and a switch 100. In the present embodiment, a pseudorandom noise output from the noise injector 113 is supplied to the deblocking filter unit 108.

The video encoding device according to the present embodiment is different from the typical video encoding device shown in Fig. 28 in that the noise injector 113 is provided and the output of the noise injector 113 is supplied to the deblocking filter unit 108. Thus, in the following description, particularly the operations of the deblocking filter unit 108 which is characteristic of the video encoding device according to the present embodiment will be described in detail.

The MB buffer 101 stores therein pixel values of MBs to be encoded in an input image frame.

A prediction signal supplied from the intra prediction unit 110 or the inter-frame prediction unit 111 via the switch 100 is reduced from the input MB supplied from the MB buffer 101.

The intra prediction unit 110 generates an intra prediction signal by use of a reconstructed image which is stored in the picture buffer 107 and has the same display time as a current frame.

The inter-frame prediction unit 111 generates an inter-frame prediction signal by use of a reference image which has a different display time from a current frame and is stored in the decode picture buffer 109.

The coder control unit 112 compares the intra prediction signal and the inter-frame prediction signal with the input MB in the MB buffer 101, selects a prediction signal having a low energy of a predictive error image block, and controls the switch 100. Information on the selected prediction signal is supplied to the entropy encoder 104.

When the prediction signal having a low energy of the predictive error image block is an intra prediction signal, the information on the selected prediction signal includes the intra prediction mode and the intra prediction direction.

The coder control unit 112 selects a base block size of the integer DCT suitable for frequency transformation of a predictive error image block based on the input MB or the predictive error image block. The selected base size of the integer DCT is supplied to the frequency transformation unit 102 and the entropy encoder 104. When the prediction signal having a low energy of the predictive error image block is an intra prediction signal, the selected base size of the integer DCT is the same block size as the intra prediction mode.

The frequency transformation unit 102 frequency-transforms the predictive error image block and transforms it from the space domain to the frequency domain at the selected base size of the integer DCT.

The quantization unit 103 quantizes a conversion coefficient at the quantization step size corresponding to the quantization parameter supplied by the coder control unit 112.

The entropy encoder 104 entropy-encodes the information on the selected prediction signal, the base size of the integer DCT, and the quantization index, and outputs as bit string or bit stream.

The inverse quantization unit 105 inversely quantizes a quantization index supplied from the quantization unit 103 for subsequent encoding.

The noise injector 113 monitors the information on the prediction signal, the base size of the integer DUCT and the quantization index for the predictive error image block supplied to the entropy encoder 104.

The noise injector 113 estimates the variation of the pixel values based on the information on the selected prediction signal, the base size of the integer DCT, the quantization index or any combination thereof, without directly analyzing the reconstructed image, and determines a pseudorandom noise injecting candidate position. For example, the variation of the pixel values of the reconstructed image of the corresponding image block is smaller for the predictive error image block having a pattern with the flat prediction type, the large base size of the integer DUCT and a small number of significant AC quantization indexes. Thus, the predictive error image block is determined as a pseudorandom noise injecting candidate position, and otherwise is determined as a pseudorandom noise non-injecting candidate position.

The noise injector 113 generates a pseudorandom noise n(i) based on the pseudorandom noise injecting candidate position. That is, in the present embodiment, a pseudorandom noise injecting candidate position corresponds to a pseudorandom noise injecting position. The pseudorandom noise n(i) may be generated based on the linear congruent method or the like by Formula (1), for example.

The noise injector 113 generates a pseudorandom noise of zero for a pseudorandom noise non-injecting candidate position. The generation of the pseudorandom noise of zero indicates that a pseudorandom noise is not injected into the predictive error image block.

The inverse conversion unit 106 inversely frequency-transforms a quantization representative value and injects a pseudorandom noise supplied from the noise injector 113 to return to the original space domain.

The picture buffer 107 stores therein a reconstructed image block in which a prediction signal is added to a reconstructed predictive error image block until all the MBs included in a current frame are encoded.

The deblocking filter unit 108 applies a lowpass filter to an edge between each MOB in the reconstructed image and its internal block, and performs a processing of removing a block distortion from the reconstructed image stored in the picture buffer 107. The deblocking filter unit 108 according to the present embodiment injects a pseudorandom noise supplied from the noise injector 113 into intermediate data of the lowpass filter to reduce contour and stair-step artifacts.

The operations of the deblocking filter unit 108 will be described below more specifically.

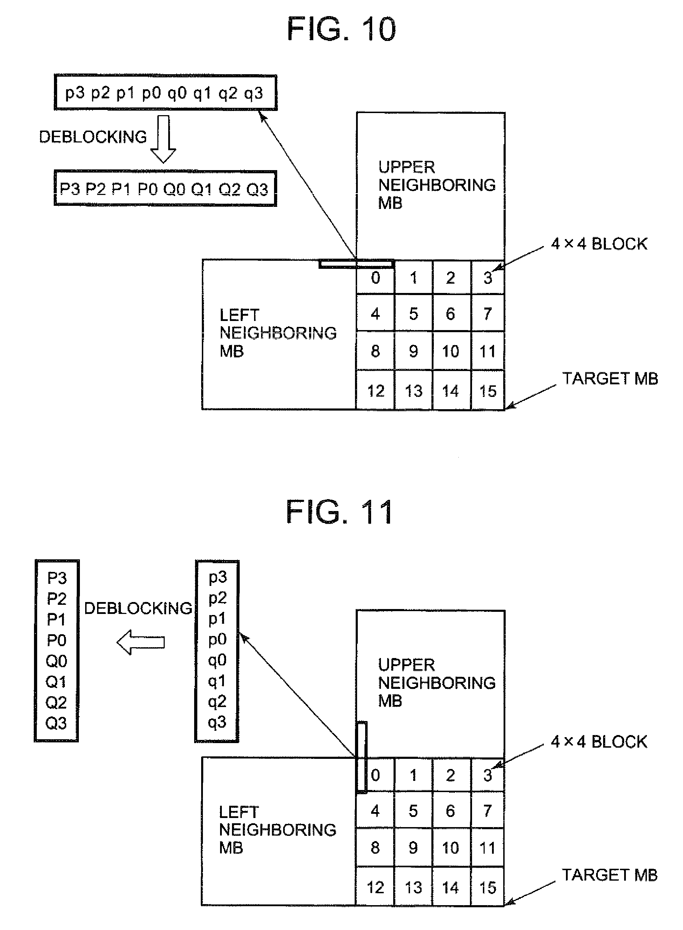

Fig. 10 and Fig. 11 are explanatory diagrams for explaining the operations of the deblocking filter unit 108. The deblocking filter unit 108 applies a lowpass filter in the horizontal direction relative to a horizontal block edge between a MB and its internal block as shown in Fig. 10. As shown in Fig. 11, a lowpass filter is applied in the vertical direction relative to a vertical block edge between a MB and its internal block. The horizontal block edges are the block edge at the left side of the 4x4 blocks 0, 4, 8, 12, the block edge at the left side of the 4x4 blocks 1, 5, 9, 13, the block edge at the left side of the 4x4 blocks 2, 6, 10, 14, and the block edge at the left side of the 4x4 blocks 3, 7, 11, 15. The vertical block edges are the block edge at the upper side of the 4x4 blocks 0, 1, 2, 3, the block edge at the upper side of the 4x4 blocks 4, 5, 6, 7, the block edge at the upper side of the 4x4 blocks 8, 9, 10, 11, and the block edge at the upper side of the 4x4 blocks 12, 13, 14, 15.

In the integer DCT having the 8x8 block size, the block edge at the left side of the 4x4 blocks 1, 5, 9, 13, the block edge at the left side of the $4\times4$ blocks 3, 7, 11, 15, the block edge at the upper side of the $4\times4$ blocks 4, 5, 6, 7, and the block edge at the upper side of the $4\times4$ blocks 12, 13, 14, 15 are not targeted for the block distortion removal. When the base of the integer DCT having the $16\times16$ block size is a base obtained by approximating the DCT base having the $16\times16$ block size by an integer value, only the block edge at the left side of the 4x4 blocks 0, 4, 8, 12 and the block edge at the upper side of the 4x4 blocks 0, 1, 2, 3 are targeted for the block distortion removal.

For the lowpass filter processing for the horizontal block edges, the pixels before the left lowpass filter relative to the block edge are assumed as p3, p2, p1, p0, the pixels after the lowpass filter are assumed as P3, P2, P1, P0, the pixels before the right lowpass filter relative to the block edge are assumed as q0, q1, q2, a3, and the pixels after the lowpass filter are assumed as Q0, Q1 Q2, Q3.

For the lowpass filter processing for the vertical block edges, the pixels before the upper lowpass filter relative to the block edge are assumed as p3, p2, p1 p0, the pixels after the lowpass filter are assumed as P3, P2, P1, P0, the pixels before the lower lowpass filter relative to the block edge are assumed as q0, q1, q2, q3, and the pixels after the lowpass filter are assumed as Q0, Q1, Q2, Q3.

P3, P2, P1, P0, Q0, Q1, Q2, Q3 are assumed to be initialized by p3, p2, p1 p0, q0. q1, q2, q3, respectively.

The lowpass filter processing for the block edges in the horizontal direction and in the vertical direction are the same. The lowpass filter processing for the block edges will be described below without particularly discriminating the horizontal direction and the vertical direction.

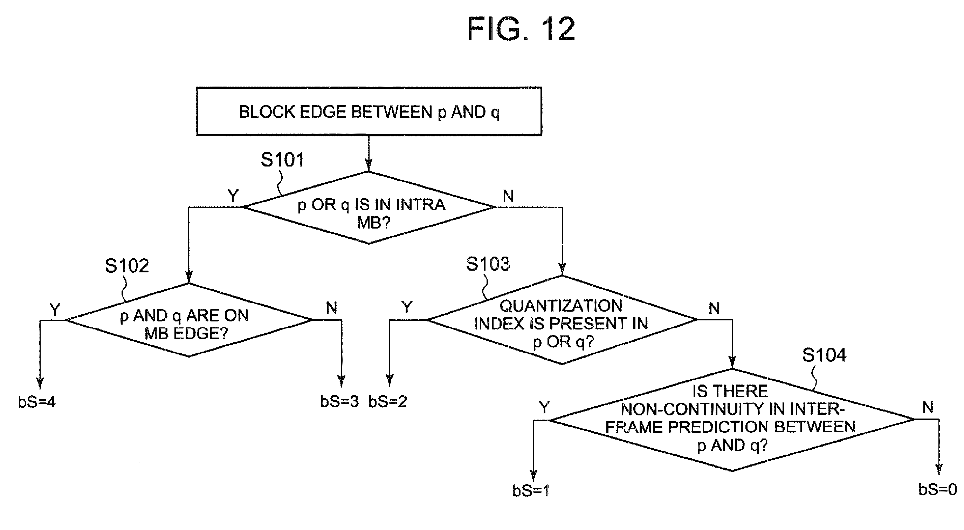

With reference to 8.7 Deblocking filter process in Non-Patent Literature 1, in the lowpass filter processing for the block edges, a block edge intensity bS ($0\leq bS\leq4$) is determined based on the extension information associated with neighboring blocks. Fig. 12 is a flowchart showing the processing of determining bS.

As shown in Fig. 12, when either the pixel p at the left side of the block edge or the pixel q at the right side of the block edge before the lowpass filter processing is performed are the pixels of the intra MB (step S101), the deblocking filter unit 108 determines whether the pixel p and the pixel q are the left and right pixels of the MB edge (step S102). When the pixel p and the pixel q are the left and right pixels of the MB edge, bS is determined at 4, and when they are not the left and right pixels of the MB edge, bS is determined at 3.

When neither the pixel p nor the pixel q are the pixels of the intra MB, the deblocking filter unit 108 determines in which of the pixel p and the pixel q the quantization index is present (step S103). When the quantization index is present in either the pixel p and the pixel q, the deblocking filter unit 108 determines bS at 2. When the quantization index is present in neither the pixel p nor the pixel q, a determination is made as to whether there is non-continuity in the inter-frame prediction between the pixel p and the pixel q (step S104) . When the inter-frame prediction is discontinuous, bS is determined at 1, and when the inter-frame prediction is not discontinuous, bS is determined at 0.

Amore detailed explanation of the processing of determining bS is described in 8.7.2 Filtering process for a set of samples across a horizontal or vertical block edge in Non-Patent Literature 1.

As the value of bS is larger, the variation at the block edge is determined to be larger, and a lowpass filter with a higher intensity is applied. At bS=0, the lowpass filter is not applied.

Subsequently, only for the block edges with bS>0, the pixels at the block edge are compared and the discontinuity at the block edge is analyzed. The analysts of the discontinuity at the block edge and the lowpass filter using the pseudorandom noise will be described for bS=4 and bS<4.

At bS=4, when $|p0-q0|<\alpha/4$ and $|p1-p0|<\beta$ are met, P0, P1 and P2 are updated by the lowpass filters expressed by Formula (18), Formula (19) and Formula (20) using the pseudorandom noise (n(i) by Formula (1)), respectively.

$$P0 = (p2 + 2 \times p1 + 2 \times p0 + 2 \times q0 + q1 + (n(pos-1)\%8) + 4)/8 \qquad (18)$$

$$P1=(p2+p1+p0+q0+(n(pos-2)\%4)+2)/4 \qquad (19)$$

$$P2=(2\times p3+3\times p2+p1+q0+q1+(n(pos-3)\%8)+4)/8 \qquad (20)$$

When the conditions of $|p0-q0|<\alpha/4$ and $|p1-p0|<\beta$ are not established, P0 is updated by the lowpass filter expressed by Formula (21) using the pseudorandom noise (n(i) by Formula (1)). P1 and P2 are not updated.
$$P0=(2\times p1+p0+q0+(n(pos-1)\%4)+2)/4 \qquad (21)$$

where $\alpha$ and $\beta$ are larger as the value of the quantization parameter Q is larger. pos is a position for the coordinate of the block position to be processed.
At bS=4, when $|p0-q0|<\alpha/4$ and $|q1-q0|<\beta$ are met, Q0, Q1 and Q2 are updated by the lowpass filters expressed by Formula (22), Formula (23) and Formula (24) using the pseudorandom noise (n(i) by Formula (1)), respectively.
$$Q0=(q2+2\times q1+2\times q0+2\times p0+p1+(n(pos)\%8)+4)/8 \qquad (22)$$

$$Q1=(q2+q1+q0+p0+(n(pos+1)\%4)+2)/4 \qquad (23)$$

$$Q2=(2\times q3+3\times q2+q1+p0+p1+(n(pos+2)\%8)+4/8 \qquad (24)$$

When the conditions of $|p0-q0|<\alpha/4$ and $|q1-q0|<\beta$ are not established, Q0 is updated by the lowpass filter expressed by Formula (25) using the pseudorandom noise (n(i) by Formula (1)). Q1 and Q2 are not updated.
$$Q0=(2\times q1+q0+p0+(n(pos)\%4)+2)/4 \qquad (25)$$

At bS=4, only when $|p0-p2|<\beta$ is met, P0 is updated by the lowpass filter expressed by Formula (26) using the pseudorandom noise (n(i) by Formula (1)).
$$P0=p0+Clip3(-tc, \ tc, \ (2\times(q0-p0)+p1-q1+(n(pos-1)\%8)+4/8)$$

$$(26)$$

where tc is a parameter which is larger as the value of the quantization parameter Q is larger.

At bS=4, only when |q0-q2|<β is met, Q0 is updated by the lowpass filter expressed by Formula (27) using the pseudorandom noise (n(i) by Formula (1)).

$$Q0=q0-\text{Clip3}\{-tc, tc, (2\times(q0-p0)+p1-q1+(n(pos)\%8)+4/8\}$$

$$(27)$$

In Formulas (18) to (27), the remainder obtained by division by 4 or 8 is added such that the influence intensity of the pseudorandom noise is pixel or less. The influence intensity of the pseudorandom noise is 1 pixel or less thereby to restrict a reduction in PSNR due to the injected pseudorandom noise.

As described in the first embodiment, when the noise injector 113 estimates that the variation of the pixel values in the reconstructed image of the image block corresponding to the predictive error image block having a pattern with a flat prediction type, a large base size of the integer DCT and a small number of significant AC quantization indexes is small, the block edge where the variation is determined to be large and a significant pseudorandom noise is supplied is only in the reconstructed image of the intra MB.

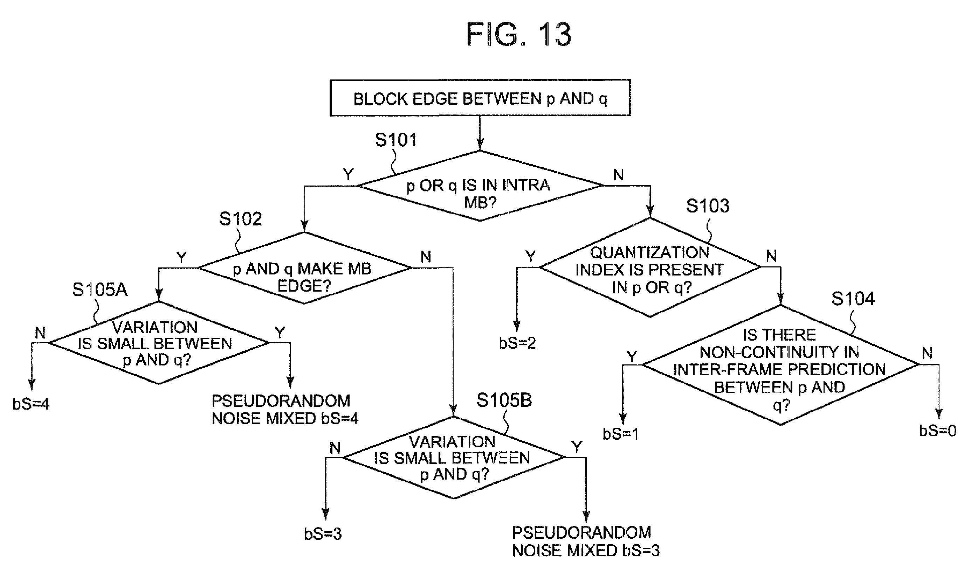

Thus, the deblocking filter unit 108 according to the present embodiment is equivalent to that the bS determination processing shown in the flowchart of Fig. 13 are employed. This means that the deblocking filter unit 108 enables an implementation for determining a pseudorandom noise injecting position based on the information on the extension of the reconstructed image block in the bS determination processing.

In the processing shown in Fig. 13, the deblocking filter unit 108 performs the processing in steps S101 to S104 shown in Fig. 12, and additionally performs a processing of determining whether the variation is small between the pixel p and the pixel q, when the pixel p and the pixel q are the left and right pixels relative to the MB edge (step S105A). When the variation is not small, bS is determined at 4, and when the variation is small, a pseudorandom noise is determined to be injected and bS is determined at 4. When the pixel p and the pixel q are not the left and right pixels relative to the MB edge, a processing of determining whether the variation is small between the pixel p and the pixel q is performed (step S105B). When the variation is not small, bS is determined at 3, and when the variation is small, a pseudorandom noise is determined to be injected and bS is determined at 3.

In the implementation for determining a pseudorandom noise injecting candidate position in the bS determination processing by the deblocking filter unit 108, as can be seen from the bS determination flow shown in Fig. 13, a pseudorandom noise is injected into only the block edge which is determined as a pseudorandom noise injecting candidate position.

The decode picture buffer 109 stores therein a reconstructed image picture with a block distortion removed, which is supplied from the deblocking filter 108, as a reference image picture. The image of the reference image picture is utilized as a reference image for generating an inter-frame prediction signal.

The video encoding device according to the present embodiment generates a bit stream through the above processing.

The video encoding device according to the present embodiment can efficiently reduce contour and stair-step artifacts in a high-resolution video similar to the video encoding device according to the first embodiment.

Fourth embodiment

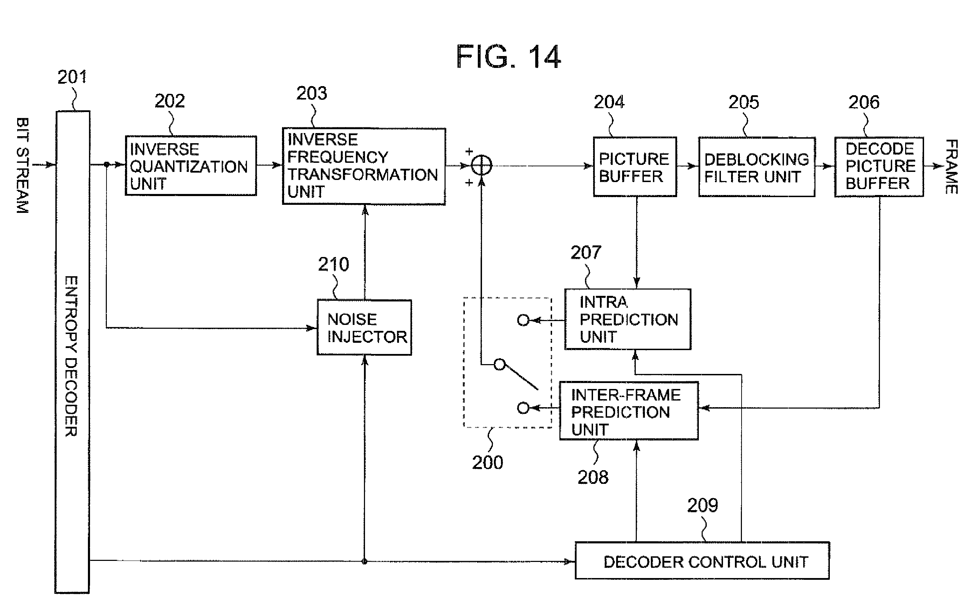

Fig. 14 is a block diagram showing a fourth embodiment according to the present invention, which shows a video decoding device for determining a pseudorandom noise injecting candidate position based on information on extension of a reconstructed image block and injecting a pseudorandom noise into a reconstructed predictive error image block. The video decoding device according to the present embodiment corresponds to the video encoding device according to the first embodiment.

As shown in Fig. 14, the video decoding device according to the present embodiment includes a noise injector 210 in addition to an entropy decoder 201, an inverse quantization unit 202, an inverse frequency transformation unit 203, a picture buffer 204, a deblocking filter unit 205, a decode picture buffer 206, an intra prediction unit 207, an inter-frame prediction unit 208, a decoder control unit 209 and a switch 200.

The entropy decoder 201 entropy-decodes a bit stream and outputs information on a prediction signal of a MB to be decoded, a base size of the integer DCT, and a quantization index. The information on a prediction signal is information on an intra prediction mode, an intra prediction direction and an inter-frame prediction similar to the first embodiment.

The intra prediction unit 207 generates an intra prediction signal by use of a reconstructed image which has the same display time as a currently-decoded frame and is stored in the picture buffer 204.

The inter-frame prediction unit 208 generates an inter-frame prediction signal by use of a reference image which has a different display time from a currently-decoded frame and is stored in the decode picture buffer 206.

The decoder control unit 209 controls the switch 200 and supplies an intra prediction signal or an inter-frame prediction signal based on the entropy-decoded inter-frame prediction.

The noise injector 210 monitors the information on the prediction signal of the MB to be decoded, which is supplied from the entropy decoder 201, the base size of the integer DCT, and the quantization index similar to the noise injector 113 according to the first embodiment.

The noise injector 210 estimates the variation of the pixel values based on the information on the prediction signal, the base size of the integer DCT, the quantization index or any combination thereof, without directly analyzing the reconstructed image, and determines a pseudorandom noise injecting candidate position, similar to the noise injector 113 according to the first embodiment.

The noise injector 210 generates a significant pseudorandom noise at a pseudorandom noise injecting candidate position. That is, in the present embodiment, a pseudorandom noise injecting candidate position corresponds to a pseudorandom noise injecting position. A pseudorandom noise of zero is generated at a pseudorandom noise non-injecting candidate position. The generation of the pseudorandom noise of zero indicates that a pseudorandom noise is not injected into the predictive error image block of the MB to be decoded.

The inverse quantization unit 202 inversely quantizes a quantization index supplied from the entropy decoder 201.

The inverse conversion unit 203 inversely frequency-transforms a quantization representative value and injects a pseudorandom noise supplied from the noise injector 210 to return to the original space domain similar to the inverse conversion unit 106 according to the first embodiment.

The picture buffer 204 stores therein a reconstructed image block in which a prediction signal is added to a reconstructed predictive error image block returned to the original space domain until all the MBs included in a currently-decoded frame are decoded.

After all the MBs included in a current frame are decoded, the deblocking filter unit 205 removes a block distortion from the reconstructed image stored in the picture buffer 204.

The decode picture buffer 206 stores therein a reconstructed image with a block distortion removed, which is supplied from the deblocking filter unit 205, as a reference image picture. The image of the reference image picture is utilized as a reference image for generating an inter-frame prediction signal. The reference image picture is output as an extension frame at a proper display timing.

The video decoding device according to the present embodiment extends a bit stream through the above processing.

The video decoding device according to the present embodiment determines a pseudorandom noise injecting candidate position for efficiently reducing contour and stair-step artifacts which are problematic in compressing and extending a high-resolution video based on block-based encoding by estimating a magnitude of the variation of the pixel values in the reconstructed image based on the information on the extension, without comparing all the pixel values of the reconstructed image and analyzing the variation of the pixel values. Thus, the video decoding device according to the present embodiment can efficiently reduce contour and stair-step artifacts in a high-resolution video.

Fifth embodiment

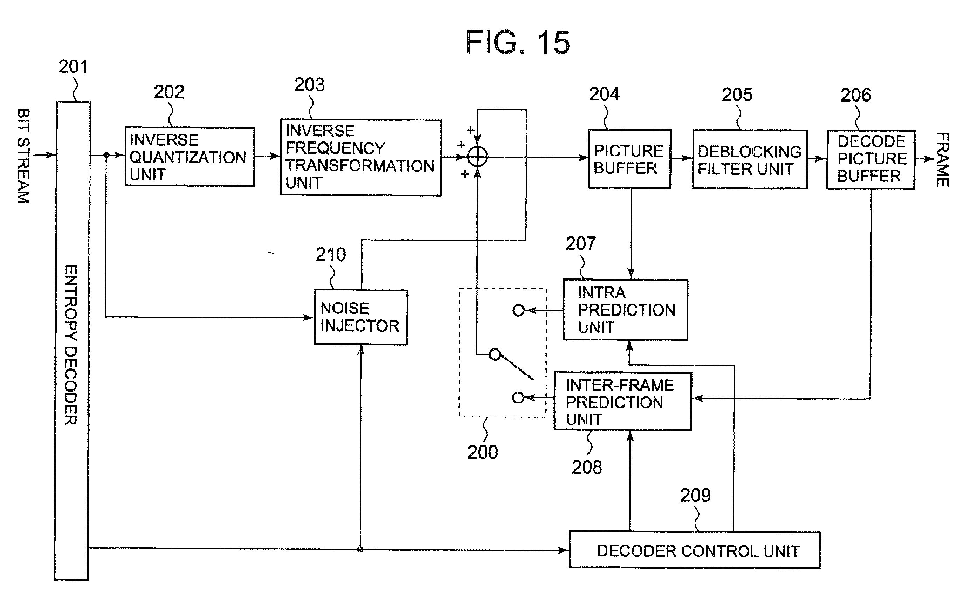

Fig. 15 is a block diagram showing a fifth embodiment according to the present invention, which shows a video decoding device for determining a pseudorandom noise injecting candidate position based on information on extension of a reconstructed image block and injecting a pseudorandom noise not into a reconstructed predictive error image block but into a reconstructed image block. The video decoding device according to the present embodiment corresponds to the video encoding device according to the second embodiment.

As shown in Fig. 15, the video decoding device according to the present embodiment includes a noise injector 210 in addition to an entropy decoder 201, an inverse quantization unit 202, an inverse frequency transformation unit 203, a picture buffer 204, a deblocking filter unit 205, a decode picture buffer 206, an intra prediction unit 207, an inter-frame prediction unit 208, a decoder control unit 209 and a switch 200.

The present embodiment is different from the fourth embodiment in that a pseudorandom noise supplied from the noise injector 210 is added to the output of the inverse frequency transformation unit 203. However, the processing of the respective units in the video decoding device according to the present embodiment are substantially the same as the processing of the respective units in the video decoding device according to the fourth embodiment shown in Fig. 14, and thus an explanation of the operations of the respective units will be omitted.

Sixth embodiment

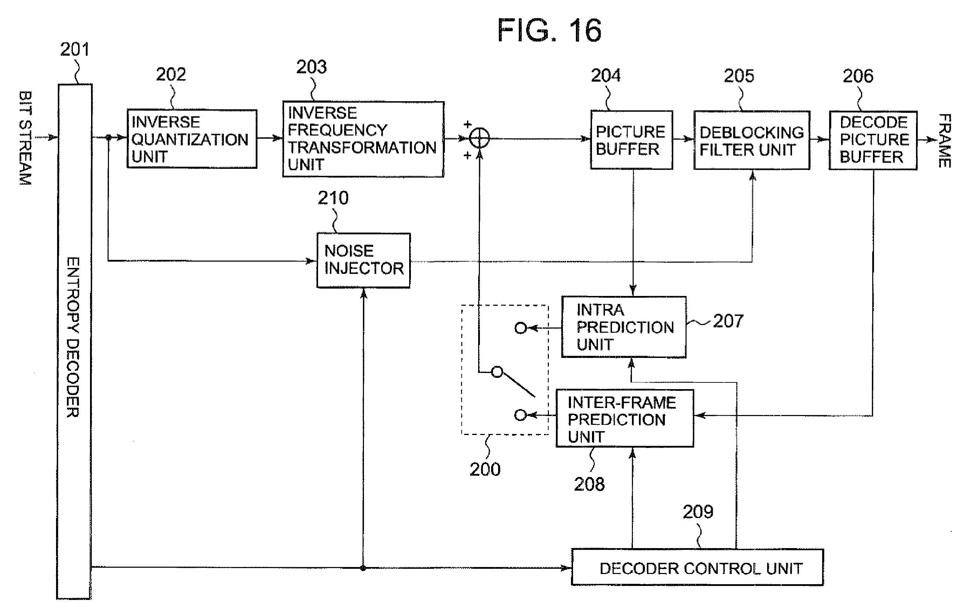

Fig. 16 is a block diagram showing a sixth embodiment according to the present invention, which shows a video decoding device for determining a pseudorandom noise injecting candidate position based on information on extension of a reconstructed image block and injecting a pseudorandom noise into a reconstructed image picture. The video decoding device according to the present embodiment corresponds to the video encoding device according to the third embodiment.

As shown in Fig. 16, the video decoding device according to the present embodiment includes a noise injector 210 in addition to an entropy decoder 201, an inverse quantization unit 202, an inverse frequency transformation unit 203, a picture buffer 204, a deblocking filter unit 205, a decode picture buffer 206, an intra prediction unit 207, an intra-frame prediction unit 208, a decoder control unit 209 and a switch 200. In the present embodiment, a pseudorandom noise output from the noise injector 210 is supplied to the deblocking filter unit 205.

The noise injector 210 according to the present embodiment is equivalent to the noise injector 113 in the video encoding device according to the first embodiment. The deblocking filter unit 205 according to the present embodiment is equivalent to the deblocking filter unit 108 using a pseudorandom noise in the video encoding device according to the third embodiment.

The entropy decoder 201 entropy-decodes a bit stream and outputs information on a prediction signal of a MB to be decoded, a base size of the integer DCT and a quantization index. The information on the prediction signal is the information on an intra prediction mode, an intra prediction direction and an inter-frame prediction similar to the first embodiment.

The intra prediction unit 207 generates an intra prediction signal by use of a reconstructed image which has the same display time as a currently-decoded frame and is stored in the picture buffer 204.

The inter-frame prediction unit 208 generates an inter-frame prediction signal by use of a reference image which has a different display time from a currently-decoded frame and is stored in the decode picture buffer 206.

The decoder control unit 209 controls the switch 200 and supplies an intra prediction signal or an inter-frame prediction signal based on the entropy-decoded inter-frame prediction.

The noise injector 210 monitors the information on the prediction signal of the MB to be decoded, which is supplied from the entropy decoder 201, the base size of the integer DCT, or the quantization index.

The noise injector 210 estimates the variation of the pixel values without directly analyzing the reconstructed image, based on the information on the prediction signal, the base size of the integer DCT, the quantization index or any combination thereof, and determines a pseudorandom noise injecting candidate position.

The noise injector 210 generates a significant pseudorandom noise at a pseudorandom noise injecting candidate position. That is, in the present embodiment, a pseudorandom noise injecting candidate position corresponds to a pseudorandom noise injecting position. A pseudorandom noise of zero is generated at a pseudorandom noise non-injecting candidate position. The generation of the pseudorandom noise of zero indicates that a pseudorandom noise is not injected into the predictive error image block of the MB to be decoded.

The inverse quantization unit 202 inversely quantizes a quantization index supplied from the entropy decoder 201.

The inverse conversion unit 203 inversely frequency-transforms a quantization representative value to return to the original space domain.

The picture buffer 204 stores therein a reconstructed image block in which a prediction signal is added to a reconstructed predictive error image block until all the MBs included in a currently-decoded frame are encoded.

The deblocking filter unit 205 uses a pseudorandom noise supplied from the noise injector 210 to remove a block distortion from the reconstructed image stored in the picture buffer 204.

The deblocking filter unit 205 applies a lowpass filter to an edge between each MB and its internal block in a reconstructed image, and removes a block distortion from the reconstructed image stored in the picture buffer 204. The deblocking filter unit 205 according to the present embodiment injects a pseudorandom noise supplied from the noise injector 210 into intermediate data of the lowpass filter thereby to reduce contour and stair-step artifacts.

The decode picture buffer 206 stores therein a reconstructed image with a block distortion removed by use of a pseudorandom noise supplied from the deblocking filter unit 205, as a reference image picture. The image of the reference image picture is utilized as a reference image for generating an inter-frame prediction signal. The reference image picture is output as an extension frame at a proper display timing.

The video decoding device according to the present embodiment extends a bit stream through the above processing.

The video decoding device according to the present embodiment can efficiently reduce contour and stair-step artifacts in a high-resolution video similar to the video decoding device according to the fourth embodiment.

The video encoding device according to the second embodiment determines a pseudorandom noise injecting position based on the information on the extension of the reconstructed image block and injects a pseudorandom noise into the reconstructed image by directly injecting the pseudorandom noise into the reconstructed image block. The video decoding device according to the fifth embodiment corresponding to the video encoding device according to the second embodiment determines a pseudorandom noise injecting position based on the information on the extension of the reconstructed image block and injects a pseudorandom noise into the reconstructed image by directly injecting the pseudorandom noise into the reconstructed image block.

As described above, the noise injectors according to the second embodiment and the fifth embodiment estimate a magnitude of the variation of the pixel values in the reconstructed image block based on the information on the prediction signal, the base size of the integer DCT or the quantization index as the information on the extension of the reconstructed image block, and determines the reconstructed image block which is estimated to have a large variation as a pseudorandom noise injecting position. Also in the video decoding device, the extension information is obtained by entropy decoding prior to obtaining the reconstructed image or the extended image.

For example, the reconstructed image block having a pattern with a prediction type for a flat prediction signal, a large base size of the integer DCT and a small number of significant AC quantization indexes is an extended image having a small variation of the pixel values within the block or an extended image having a small variation of the pixel values on the block edge.

There may be considered other embodiment in which the noise injector assumes a reconstructed image block which is estimated to have a large variation as a pseudorandom noise injecting candidate position, actually calculates the variation of the pixel values only for the reconstructed image block at the candidate position, and determines a pseudorandom noise injecting position based on a magnitude of the actually-calculated variation of the pixel values. When the processing are performed in this way, a pseudorandom noise is injected into a reconstructed image at a more suitable position and human visual sensitivity for contour and stair-step artifacts can be reduced.

Specifically, the noise injector calculates the variation $pV_{i,j}$ of the peripheral pixel value ($x_{i+m, j+n}$ {-w≤m≤w, -h≤n≤h}) by Formula (28) for the pixel $x_{ij}$ at each position (i, j) 10≤i≤bsizex-1, 0≤j≤bsizey-1) in the reconstructed image block at the pseudorandom noise injecting candidate position.

[Equation 13]

$$pV_{i,j} = \sum_{n=-h}^{h} \sum_{m=-w}^{w} \left\{ \left| x_{i+m,j+n} - x_{i+m+1,j+n} \right| + \left| x_{i+m,j+n} - x_{i+m,j+n+1} \right| \right\} \quad \cdots (28)$$

For example, the pseudorandom noise $n_{i,j}$ is injected into only the pixel $x_{ij}$ at the position where $pV_{i,j}$ is smaller than a predetermined threshold th, based on Formula (29).

[Equation 14]

$$x_{ij} = \begin{cases} ((x_{ij} << 6) + (n_{ij} \% 64) + 32) >> 6 & \cdots \quad \text{if} \ (pV_{i,j} < th) \\ x_{ij} & \cdots \quad \text{Otherwise} \end{cases} \quad \cdots (29)$$

where bsizex is a horizontal size of the base size of the integer DCT, and bsizey is a vertical size of the base size of the integer DCT. A pseudorandom noise is not injected into the reconstructed image in the reconstructed image block not at a candidate position.

There may be also considered an embodiment in which quantization parameters are utilized for the extension information and a pseudorandom noise is adjusted to be small for the reconstructed image having a small quantization step size so as not to inject a pseudorandom noise. With the structure, an adverse effect due to a injected pseudorandom noise can be reduced in high bit rate encoding with a small quantization step size.

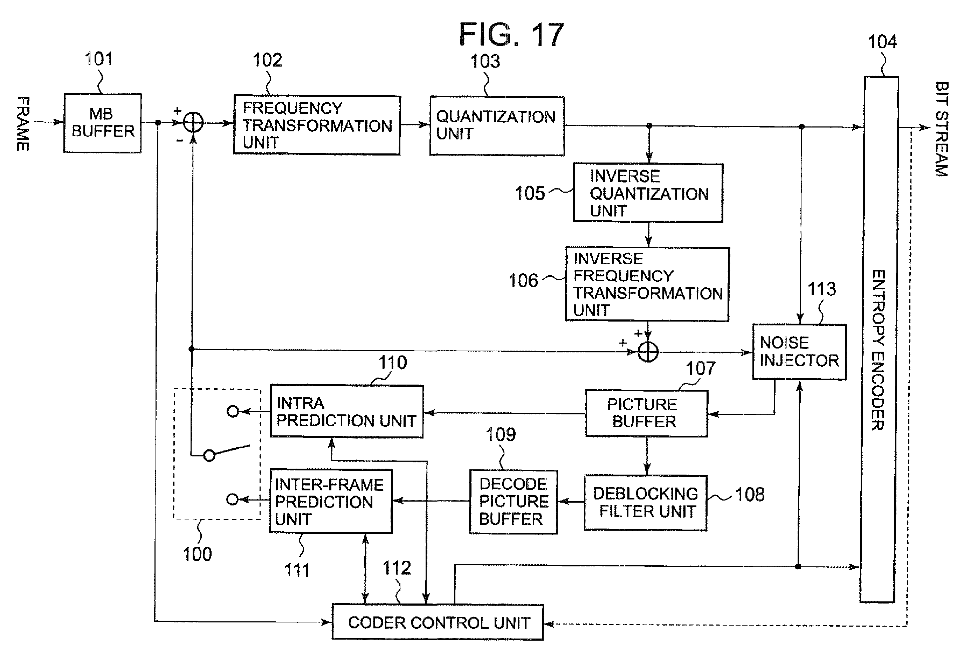

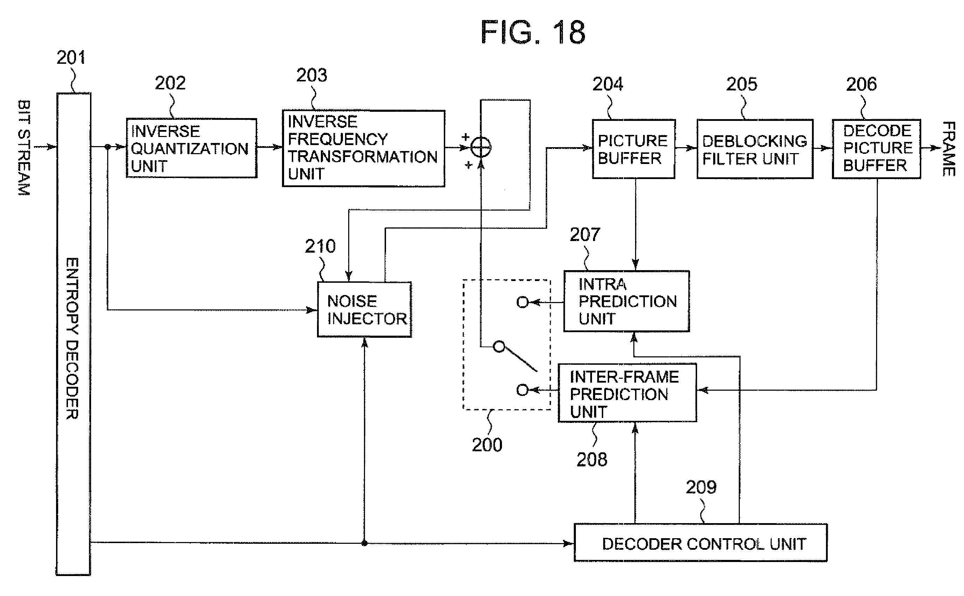

When a noise injector for assuming a reconstructed image block which is estimated to have a large variation as a pseudorandom noise injecting candidate position, actually calculating the variation of the pixel values only for the reconstructed image block at the candidate position, and determining a pseudorandom noise injecting position based on a magnitude of the actually-calculated variation of the pixel values is applied to the video encoding device according to the second embodiment and the video decoding device according to the fifth embodiment, the structure of the video encoding device is as shown in Fig. 17 and the structure of the video decoding device is as shown in Fig. 18.

That is, as shown in Fig. 17, in the video encoding device, the noise injector 113 estimates the variation of the pixel values without directly analyzing the reconstructed image, based on the information on the selected prediction signal, the base size of the integer DCT, the quantization index or any combination thereof, and determines a pseudorandom noise injecting candidate position based on the estimation result. The variation of the pixel values of the reconstructed image is calculated at the pseudorandom noise injecting candidate position. As shown in Fig. 18, in the video decoding device, the noise injector 210 estimates the variation of the pixel values without directly analyzing the reconstructed image, based on the information on the selected prediction signal, the base size of the integer DCT, the quantization index or any combination thereof, and determines a pseudorandom noise injecting candidate position based on the estimation result. Then, the variation of the pixel values in the reconstructed image is calculated at the pseudorandom noise injecting candidate position.

Also for the third and sixth embodiments, the noise injector may assume a reconstructed image block which is estimated to have a large variation as a pseudorandom noise injecting candidate position, actually calculate the variation of the pixel values only for the reconstructed image block at the candidate position, and determine a pseudorandom noise injecting position based on a magnitude of the actually-calculated variation of the pixel values.

Specifically, in the third embodiment, when the deblocking filter device determines a pseudorandom noise injecting position through the bS determination processing, as can be seen from the bS determination processing shown in Fig. 13, the pixels in the extended image are compared based on Formula (30) to confirm the variation npV of the neighboring pixels only for the block edge which is determined as a pseudorandom noise injecting candidate position, and a pseudorandom noise may be injected by the lowpass filter processing only when the variation npV of the neighboring pixels is equal to or less than the predetermined threshold th.

$$npV=|p3-p2|+|p2-p1|+|p1-p0|+|p0-q0|+|q0-q1|+|q1-q2|+|q2-p3|$$

$$(30)$$

With the above processing, the pixel variation is calculated only for the block edge determined as a pseudorandom noise injecting candidate position so that a more suitable pseudorandom noise injecting position can be determined with a less amount of calculations for expectation value.

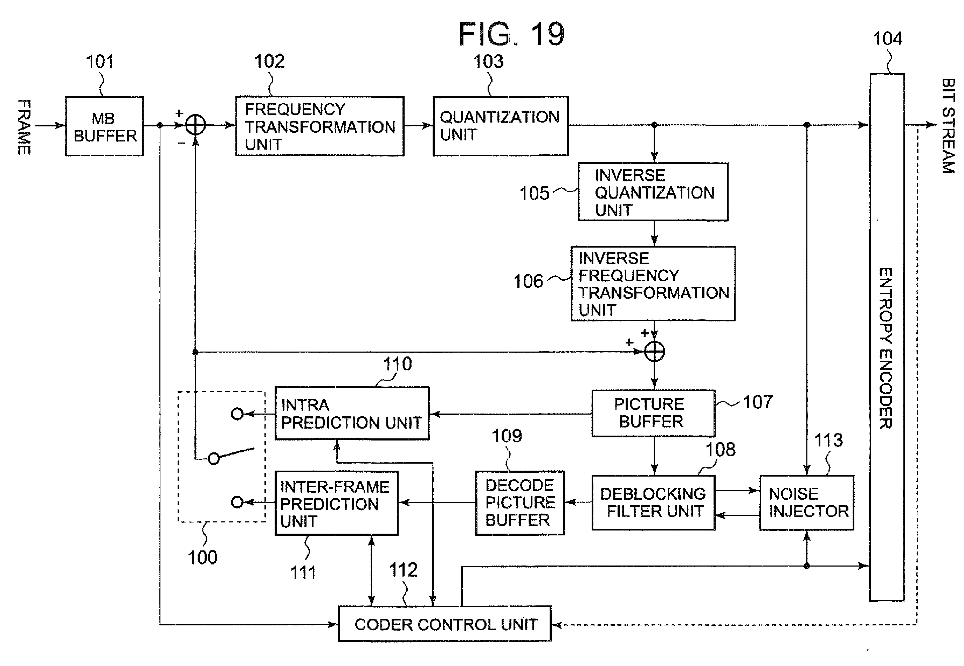

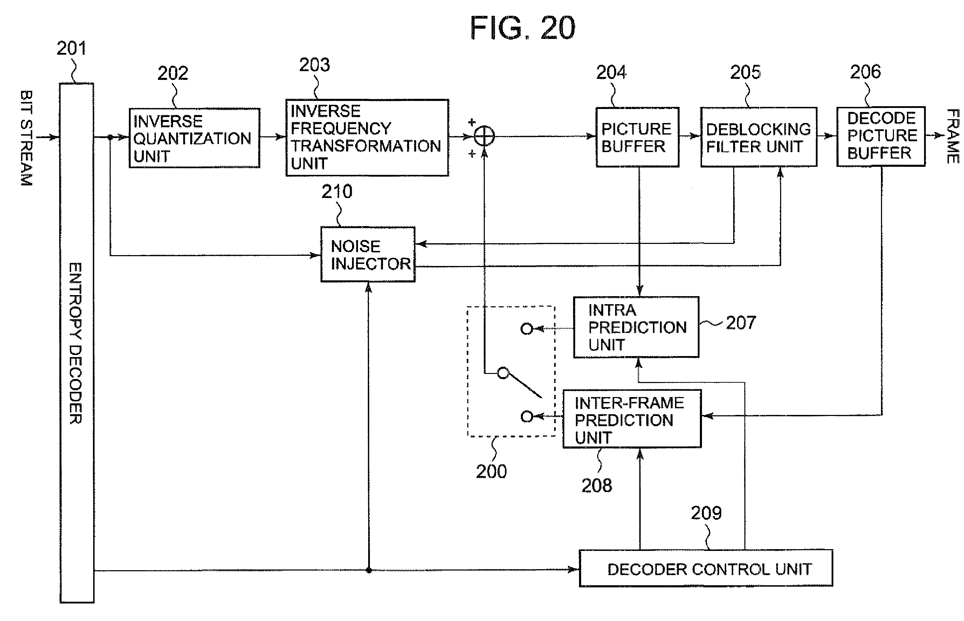

When the noise injector for assuming a reconstructed image block which is estimated to have a large variation as a pseudorandom noise injecting candidate position, actually calculating the variation of the pixel values only for the reconstructed image block at the candidate position, and determining a pseudorandom noise injecting position based on a magnitude of the actually-calculated variation of the pixel values is applied to the video encoding device according to the third embodiment and the video decoding device according to the sixth embodiment, the structure of the video encoding device is as shown in Fig. 19 and the structure of the video decoding device is as shown in Fig. 20.

That is, as shown in Fig. 19, in the video encoding device, the noise injector 113 estimates the variation of the pixel values without directly analyzing the reconstructed image, based on the information on the selected prediction signal, the base size of the integer DCT, the quantization index or any combination thereof, and determines a pseudorandom noise injecting candidate position based on the estimation result. The variation npV of the neighboring pixels is confirmed only for the edge at the pseudorandom noise injecting candidate position. As shown in Fig. 20, in the video decoding device, the noise injector 210 estimates the variation of the pixel values without directly analyzing the reconstructed image, based on the information on the selected prediction signal, the base size of the integer DCT, the quantization index or any combination thereof, and determines a pseudorandom noise injecting candidate position based on the estimation result. The variation npV of the neighboring pixels is confirmed only for the edge at the pseudorandom noise injecting candidate position.

When a pseudorandom noise is injected at a flat area, a performance of the intra prediction in subsequent flat areas can be lowered due to the influence.

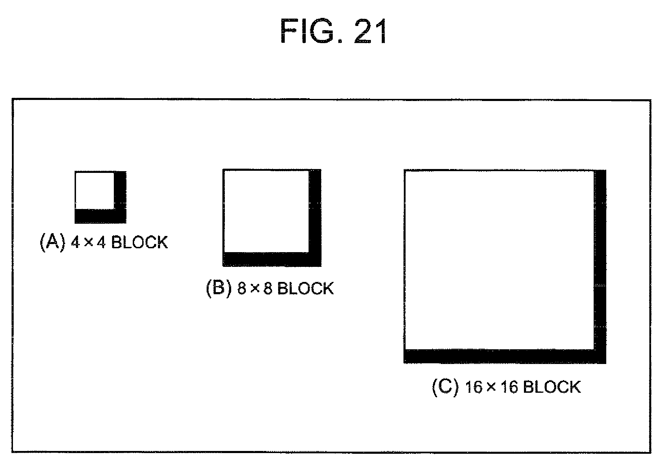

In order to prevent the reduction in the performance of the intra prediction, there may be considered an embodiment in which the noise injector according to the first, second, fourth and fifth embodiments does not inject a pseudorandom noise into a reconstructed image at a position of a referred image (a reference image relative to a subsequent image block) for the intra prediction, for example. The referred image for the intra prediction corresponds to a L-shaped area in the explanatory diagram of Fig. 21.

There may be considered other embodiment in which the intra prediction device utilizes the smoothed peripheral pixels of the reconstructed image as the reference pixels by a stronger lowpass filter in the third and sixth embodiments applying a lowpass filter with a higher intensity when the variation is large at a block edge.

In each of the embodiments, any generation method may be used as the pseudorandom noise generation method in the noise injector, but it is desirable that the pseudorandom noise generator is reset in a predetermined unit of video encoding or video decoding.

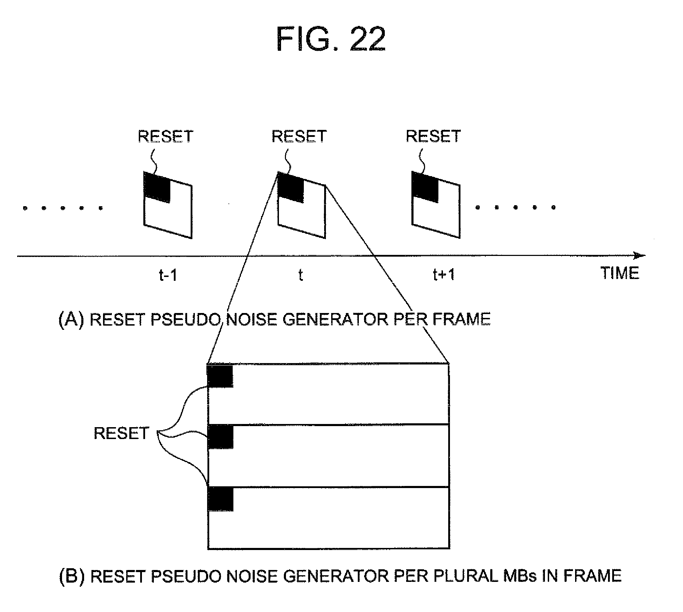

Fig. 22 is an explanatory diagram for explaining other embodiment in which a pseudorandom noise generator is reset in a predetermined unit of video encoding or video decoding.

The predetermined unit of video encoding or video decoding may be a head MB of each frame (see Fig. 22 (A)), plural MBs in each frame (see Fig. 22(B)), MB pair using a dependence relationship between the pixels in a reconstructed image, and the like. The pseudorandom noise generator is reset in the predetermined unit of video encoding or video decoding so that random accessibility for video decoding can be improved in the example shown in Fig. 22 (A) and parallel processability for video encoding and video decoding can be improved in the example shown in Fig. 22(B), for example.

For example, the coder control unit 112 may reset the initial value n(0) of the pseudorandom noise n(i) in the pseudorandom noise generator based on the linear congruent method by a predetermined value in the predetermined unit of video encoding. The video encoding device may embed the predetermined value for reset or information for identifying the predetermined value in a bit stream. The video decoding device can read the predetermined value for reset or the information for identifying the predetermined value, which is embedded in the bit stream, to generate a pseudorandom noise based on the information, thereby generating the same pseudorandom noise as that in the video encoding side so that a mismatch in the image due to the pseudorandom noise can be avoided between the video encoding and the video decoding.

A predictive error due to the inter-frame prediction is almost zero in a still or parallel movement area. However, there may be considered that a pseudorandom noise is injected so that a predictive error is not non-zero in a still or parallel movement area. Thus, there may be considered other embodiment in which in order to prevent such a situation, the noise injector injects a pseudorandom noise into the reconstructed image only for I frames not using the inter-frame prediction in each of the embodiments.

Each of the embodiments may be configured in hardware but may be realized by a computer program.

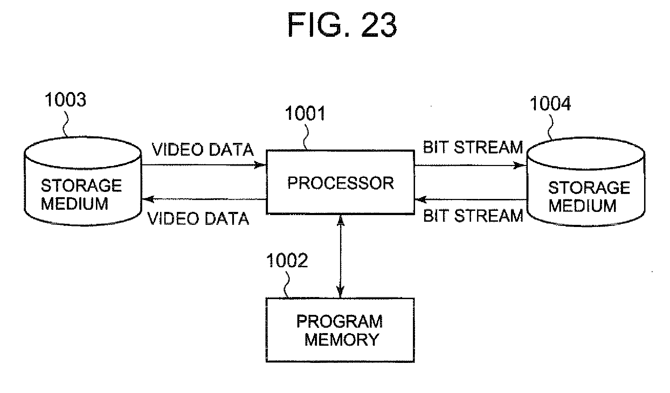

An information processing system shown in Fig. 23 includes a processor 1001, a program memory 1002, a storage medium 1003 for storing video data therein, and a storage medium 1004 for storing bit streams therein. The storage medium 1003 and the storage medium 1004 may be separate storage mediums or may be one storage area made of the same storage medium. A magnetic storage medium such as hard disc may be used for the storage mediums.

In the information processing system shown in Fig. 23, the program memory 1002 stores therein programs for realizing the functions of the respective blocks (except for the buffer block) shown in Fig. 1, Fig. 8, Fig. 9 and Figs. 14 to 20. The processor 1001 performs the processing according to the programs stored in the program memory 1002 to realize the functions of the video encoding device or the video decoding device shown in Fig. 1, Fig. 8, Fig. 9 and Figs. 14 to 20.

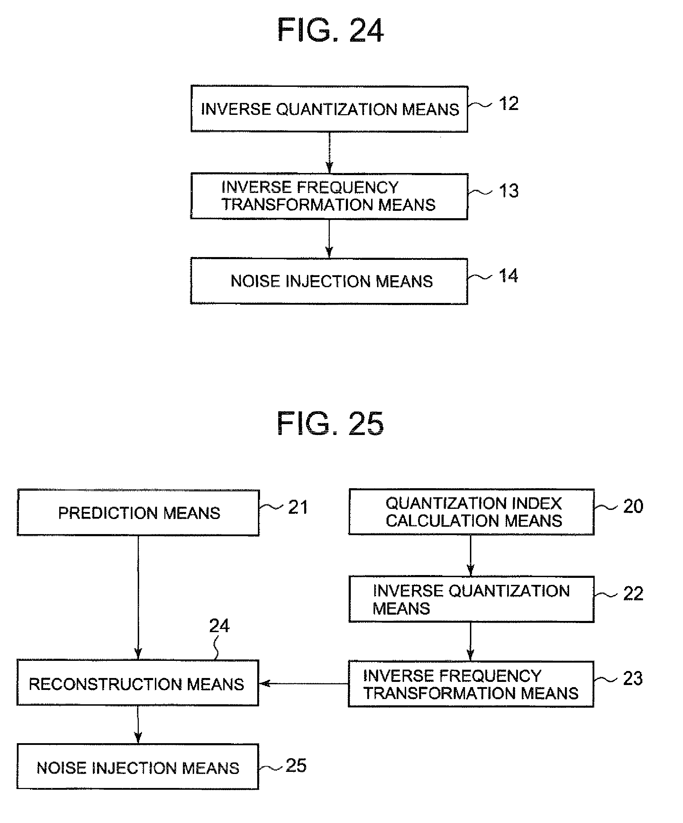

Fig. 24 is a block diagram showing a main structure of a video encoding device according to the present invention. As shown in Fig. 24, the video encoding device according to the present invention includes an inverse quantization means 12 for inversely quantizing a quantization index to obtain a quantization representative value, an inverse frequency transformation means 13 for inversely transforming the quantization representative value obtained by the inverse quantization means 12 to obtain a reconstructed image block, and a noise inject means 14 for determining a pseudorandom noise injecting position based on information on extension of the reconstructed image block and injecting a pseudorandom noise into an image at the pseudorandom noise injecting position.

In each of the embodiments, there is also disclosed a video encoding device in which a noise inject means determines a pseudorandom noise injecting position based on a prediction type, a conversion block size, a quantization index, or any combination thereof as extension information.

In each of the embodiments, there is also disclosed a video encoding device in which a noise inject means determines a reconstructed image block having a pattern with a flat prediction type, a large conversion block size and a small number of significant AC quantization indexes as a pseudorandom noise injecting position.

In each of the embodiments, there is also disclosed a video encoding device in which a noise inject means injects a pseudorandom noise adjusted according to a quantization step size.

In each of the embodiments, there is also disclosed a video encoding device in which a noise inject means does not inject a pseudorandom noise into an image at a reference image position for intra prediction.

In each of the embodiments, there is also disclosed a video encoding device including a reset means (which is realized by the coder control unit 112, for example) for resetting a noise inject means in a predetermined unit of video encoding.

Fig. 25 is a block diagram showing a main structure of a video decoding device according to the present invention. As shown in Fig. 25, the video decoding device according to the present invention includes an entropy decode means 20 for entropy-decoding a bit string to obtain a quantization index, a prediction means 21 for calculating an intra prediction signal or an inter-frame prediction signal for an image block, an inverse quantization means 22 for inversely quantizing a quantization index to obtain a quantization representative value, an inverse frequency transformation means 23 for inversely transforming the quantization representative value obtained by the inverse quantization means 22 to obtain a reconstructed predictive error image block, a reconstruction means 24 for adding an intra prediction signal or an inter-frame prediction signal to the reconstructed predictive error image block obtained by the inverse frequency transformation means to obtain a reconstructed image block, and a noise inject means 25 for determining a pseudorandom noise injecting position based on information on extension of the reconstructed image block and injecting a pseudorandom noise into an image at the pseudorandom noise injecting position.

In each of the embodiments, there is also disclosed a video decoding device in which a noise inject means determines a pseudorandom noise injecting position based on a prediction type, a conversion block size, a quantization index, or any combination thereof as extension information.

In each of the embodiments, there is also disclosed a video decoding device in which a noise inject means determines a reconstructed image block having a pattern with a flat prediction type, a large conversion block size, and a small number of significant AC quantization indexes as a pseudorandom noise injecting position.

In each of the embodiments, there is also disclosed a video decoding device in which a noise inject means injects a pseudorandom noise adjusted according to a quantization step size.

In each of the embodiments, there is also disclosed a video decoding device in which a noise inject means does not inject a pseudorandom noise into an image at a reference image position for intra prediction.

In each of the embodiments, there is also disclosed a video decoding device including a reset means (which is realized by the decoder control unit 209, for example) for resetting a noise inject means in a predetermined unit of video decoding.

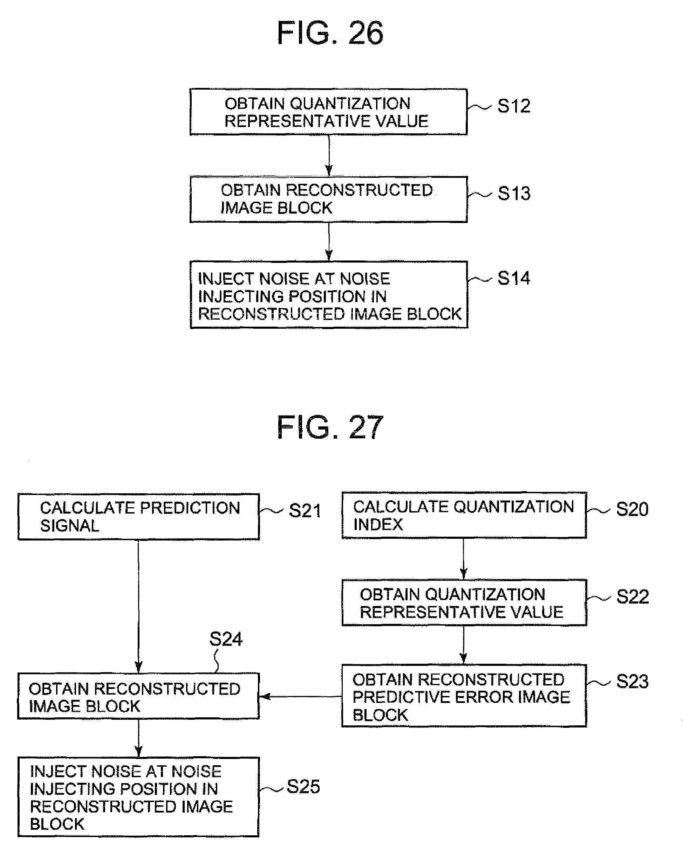

Fig. 26 is a flowchart showing main steps of a video encoding method according to the present invention. As shown in Fig. 26, in the video encoding method according to the present invention, a quantization index is inversely quantized to obtain a quantization representative value, the obtained quantization representative value is inversely transformed to obtain a reconstructed image block, a pseudorandom noise injecting position is determined based on information on extension of the reconstructed image block, and a pseudorandom noise is injected into an image at the pseudorandom noise injecting position.

Fig. 27 is a flowchart showing main steps of a video decoding method according to the present invention. As shown in Fig. 27, in the video decoding method according to the present invention, a bit string is entropy-decoded to obtain a quantization index (step S20), an intra prediction signal or an inter-frame prediction signal is calculated for an image block (step S21), the quantization index is inversely quantized to obtain a quantization representative value (step S22), the obtained quantization representative value is inversely transformed to obtain a reconstructed predictive error image block (step S23), an intra prediction signal or an inter-frame prediction signal is added to the reconstructed predictive error image block to obtain a reconstructed image block (step S24), and a pseudorandom noise injecting position is determined based on information on extension of the reconstructed image block to inject a pseudorandom noise into an image at the pseudorandom noise injecting position (step S25).

The present invention has been described above with reference to the embodiments and the examples, but the present invention is not limited to the embodiments and the examples. The structure and details of the present invention can be variously modified to be understood by those skilled in the art within the scope of the present invention.

The present application claims the priority based on Japanese Patent Application No. 2009-272178 filed on November 30, 2009, the disclosure of which is all incorporated herein.

Reference Signs List

12: Inverse quantization means
13: Inverse frequency transformation means
14: Noise inject means
20: Quantization index calculation means
21: Prediction means
22: Inverse quantization means
23: Inverse frequency transformation means
24: Reconstruction means
25: Noise inject means
100: Switch
101: MB buffer
102: Frequency transformation unit
103: Quantization unit

104: Entropy encoder
105: Inverse quantization unit
106: Inverse frequency transformation unit
107: Picture buffer
108: Deblocking filter unit
109: Decode picture buffer
110: Intra prediction unit
111: Inter-frame prediction unit
112: Coder control unit
113: Noise injector
200: Switch
201: Entropy decode unit
202: Inverse quantization unit
203: Inverse frequency transformation unit
204: Picture buffer
205: Deblocking filter unit
206: Decode picture buffer
207: Intra prediction unit
208: Inter-frame prediction unit
209: Decode control unit
210: Noise injector
1001: Processor
1002: Program memory
1003: Storage medium
1004: Storage medium

**Claims**

1. A video encoding device comprising:

   an inverse quantization means for inversely quantizing a quantization index to obtain a quantization representative value;
   an inverse frequency transformation means for inversely transforming the quantization representative value obtained by the inverse quantization means to obtain a reconstructed image block; and
   a noise inject means for determining a pseudorandom noise injecting position based on information on extension of the reconstructed image block and injecting a pseudorandom noise into an image at the pseudorandom noise injecting position.

2. The video encoding device according to claim 1, further comprising:

   a prediction means for calculating an intra prediction signal or an inter-frame prediction signal for an image block;
   a predictive error calculation means for reducing the intra prediction signal or the inter-frame prediction signal from the image block to obtain a predictive error image block;
   a frequency transformation means for transforming the predictive error image block obtained by the predictive error calculation means to obtain a conversion coefficient;
   a quantization means for quantizing the conversion coefficient obtained by the frequency transformation means to obtain a quantization index; and
   an entropy encode means for entropy-encoding the quantization index obtained by the quantization means to output a bit string,
   wherein the inverse frequency transformation means inversely transforms the quantization representative value to calculate a reconstructed predictive error image block and adds an intra prediction signal or an inter-frame prediction signal to the reconstructed predictive error image block to obtain a reconstructed image block.

3. The video encoding device according to claim 1, further comprising:

   a prediction means for calculating an intra prediction signal or an inter-frame prediction signal for an image block;
   a predictive error calculation means for reducing the intra prediction signal or the inter-frame prediction signal from the image block to obtain a predictive error image block;

a frequency transformation means for transforming the predictive error image block obtained by the predictive error calculation means to obtain a conversion coefficient;

a quantization means for quantizing the conversion coefficient obtained by the frequency transformation means to obtain a quantization index; and

an entropy encode means for entropy-encoding the quantization index obtained by the quantization means to output a bit string,

wherein the inverse frequency transformation means for inversely transforming the quantization representative value to calculate a reconstructed predictive error image block and adding an intra prediction signal or an inter-frame prediction signal to the reconstructed predictive error image block to obtain a reconstructed image block, the video encoding device further comprising a reconstructed image storage means for storing the reconstructed image block obtained by the inverse frequency transformation means as a reconstructed image picture; and

a block distortion removal means for removing a block distortion of the reconstructed image picture,

wherein the noise inject means for injecting a pseudorandom noise into the reconstructed image picture with a block distortion removed.

4. The video encoding device according to any one of claims 1 to 3, wherein the noise inject means determines a pseudorandom noise injecting position based on a prediction type, a conversion block size, a quantization index or any combination thereof as extension information.

5. The video encoding device according to claim 4, wherein the noise inject means determines a reconstructed image block having a pattern with a flat prediction type, a large conversion block size and a small number of significant AC quantization indexes as a pseudorandom noise injecting position.

6. The video encoding device according to any one of claims 1 to 5, wherein the noise inject means injects a pseudorandom noise adjusted according to a quantization step size.

7. The video encoding device according to any one of claims 1 to 6, wherein the noise inject means does not inject a pseudorandom noise into an image at a reference image position for intra prediction.

8. The video encoding device according to any one of claims 1 to 7, further comprising a reset means for resetting the noise inject means in a predetermined unit of video encoding.

9. A video decoding device comprising:

an entropy decode means for entropy-decoding a bit string to obtain a quantization index;

a prediction means for calculating an intra prediction signal or an inter-frame prediction signal for an image block;

an inverse quantization means for inversely quantizing the quantization index to obtain a quantization representative value;

an inverse frequency transformation means for inversely transforming the quantization representative value obtained by the inverse quantization means to obtain a reconstructed predictive error image block;

a reconstruction means for adding an intra prediction signal or an inter-frame prediction signal to the reconstructed predictive error image block obtained by the inverse frequency transformation means to obtain a reconstructed image block; and

a noise inject means for determining a pseudorandom noise injecting position based on information on extension of the reconstructed image block and injecting a pseudorandom noise into an image at the pseudorandom noise injecting position.

10. The video decoding device according to claim 9, further comprising:

a reconstructed image storage means for storing a reconstructed image block as a reconstructed image picture; and

a block distortion removal means for removing a block distortion of the reconstructed image picture,

wherein the noise inject means injects a pseudorandom noise into the reconstructed image picture with a block distortion removed.

11. The video decoding device according to claim 9 or 10, wherein the noise inject means determines a pseudorandom noise injecting position based on a prediction type, a conversion block size, a quantization index or any combination thereof as extension information.

**12.** The video decoding device according to claim 11, wherein the noise inject means determines a reconstructed image block having a pattern with a flat prediction type, a large conversion block size and a small number of significant AC quantization indexes as a pseudorandom noise injecting position.

**13.** The video decoding device according to any one of claims 9 to 12, wherein the noise inject means injects a pseudorandom noise adjusted according to a quantization step size.

**14.** The video decoding device according to any one of claims 9 to 13, wherein the noise inject means does not inject a pseudorandom noise into an image at a reference image position for intra prediction.

**15.** The video decoding device according to any one of claims 9 to 14, further comprising a reset means for resetting the noise inject means in a predetermined unit of video decoding.

**16.** A video encoding method comprising:

inversely quantizing a quantization index to obtain a quantization representative value;
inversely transforming the obtained quantization representative value to obtain a reconstructed image block; and
determining a pseudorandom noise injecting position based on information on extension of the reconstructed image block and injecting a pseudorandom noise into an image at the pseudorandom noise injecting position.

**17.** The video encoding method according to claim 16, further comprising:

calculating an intra prediction signal or an inter-frame prediction signal for an image block;
reducing the intra prediction signal or the inter-frame prediction signal from the image block to obtain a predictive error image block;
transforming the obtained predictive error image block to obtain a conversion coefficient;
quantizing the obtained conversion coefficient to obtain a quantization index;
entropy-encoding the obtained quantization index to output a bit string; and
inversely transforming the quantization representative value to calculate a reconstructed predictive error image block and adding an intra prediction signal or an inter-frame prediction signal to the reconstructed predictive error image block to obtain a reconstructed image block.

**18.** The video encoding method according to claim 16, further comprising:

calculating an intra prediction signal or an inter-frame prediction signal for an image block;
reducing the intra prediction signal or the inter-frame prediction signal from the image block to obtain a predictive error image block;
converting the obtained predictive error image block to obtain a conversion coefficient;
quantizing the obtained conversion coefficient to obtain a quantization index;
entropy-encoding the obtained quantization index to output a bit string; and
inversely converting the quantization representative value to calculate a reconstructed predictive error image block and adding an intra prediction signal or an inter-frame prediction signal to the reconstructed predictive error image block to obtain a reconstructed image block;
storing the reconstructed image block as a reconstructed image picture in a reconstructed image storage means;
removing a block distortion of the reconstructed image picture; and
injecting a pseudorandom noise into the reconstructed image picture with a block distortion removed.

**19.** The video encoding method according to any one of claims 16 to 18, further comprising:

determining a pseudorandom noise injecting position based on a prediction type, a conversion block size, a quantization index or any combination thereof as extension information.

**20.** The video encoding method according to claim 19, further comprising:

determining a reconstructed image block having a pattern with a flat prediction type, a large conversion block size and a small number of significant AC quantization indexes as a pseudorandom noise injecting position.

**21.** The video encoding method according to any one of claims 16 to 20, further comprising:

injecting a pseudorandom noise adjusted according to a quantization step size.

**22.** The video encoding method according to any one of claims 16 to 21, further comprising:

not injecting a pseudorandom noise into an image at a reference image position for intra prediction.

**23.** The video encoding method according to any one of claims 16 to 22, further comprising:

generating, as a pseudorandom noise, a pseudorandom noise which is reset in a predetermined unit of video encoding.

**24.** A video decoding method comprising:

entropy-decoding a bit string to obtain a quantization index;
calculating an intra prediction signal or an inter-frame prediction signal for an image block;
inversely quantizing the quantization index to obtain a quantization representative value;
inversely converting the obtained quantization representative value to obtain a reconstructed predictive error image block;
adding an intra prediction signal or an inter-frame prediction signal to the reconstructed predictive error image block to obtain a reconstructed image block; and
determining a pseudorandom noise injecting position based on information on extension of the reconstructed image block and injecting a pseudorandom noise into an image at the pseudorandom noise injecting position.

**25.** The video decoding method according to claim 24, further comprising:

storing the reconstructed image block as a reconstructed image picture into a reconstructed image storage means;
removing a block distortion of the reconstructed image picture; and
injecting a pseudorandom noise into the reconstructed image picture with a block distortion removed.

**26.** The video decoding method according to claim 24 or 25, further comprising:

determining a pseudorandom noise injecting position based on a prediction type, a conversion block size, a quantization index or any combination thereof as extension information.

**27.** The video decoding method according to claim 26, further comprising:

determining a reconstructed image block having a pattern with a flat prediction type, a large conversion block size and a small number of significant AC quantization indexes as a pseudorandom noise injecting position.

**28.** The video decoding method according to any one of claims 24 to 27, further comprising:

injecting a pseudorandom noise adjusted according to a quantization step size.

**29.** The video decoding method according to any one of claims 24 to 28, further comprising:

not injecting a pseudorandom noise into an image at a reference image position for intra prediction.

**30.** The video decoding method according to any one of claims 24 to 29, further comprising:

generating, as a pseudorandom noise, a pseudorandom noise which is reset in a predetermined unit of video decoding.

**31.** A video encoding program for causing a computer to execute:

a processing of inversely quantizing a quantization index to obtain a quantization representative value;

a processing of inversely converting the obtained quantization representative value to obtain a reconstructed image block; and

a processing of determining a pseudorandom noise injecting position based on information on extension of the reconstructed image block and injecting a pseudorandom noise into an image at the pseudorandom noise injecting position.

32. The video encoding program according to claim 31, for causing a computer to execute:

a processing of calculating an intra prediction signal or an later-frame prediction signal for an image block;

a processing of reducing the intra prediction signal or the inter-frame prediction signal from the image block to obtain a predictive error image block;

a processing of converting the obtained predictive error image block to obtain a conversion coefficient;

a processing of quantizing the obtained conversion coefficient to obtain a quantization index;

a processing of entropy-encoding the obtained quantization index to output a bit string; and

a processing of inversely converting the quantization representative value to calculate a reconstructed predictive error image block and adding an intra prediction signal or an inter-frame prediction signal to the reconstructed predictive error image block to obtain a reconstructed image block.

33. The video encoding program according to claim 31, for causing a computer to execute:

a processing of obtaining an intra prediction signal or an inter-frame prediction signal for an image block;

a processing of reducing the intra prediction signal or the inter-frame prediction signal from the image block to obtain a predictive error image block;

a processing of converting the obtained predictive error image block to obtain a conversion coefficient;

a processing of quantizing the obtained conversion coefficient to obtain a quantization index;

a processing of entropy-encoding the obtained quantization index to output a bit string;

a processing of inversely converting the quantization representative value to calculate a reconstructed predictive error image block and adding an intra prediction signal or an inter-frame prediction signal to the reconstructed predictive error image block to obtain a reconstructed image block;

a processing of storing the reconstructed image block obtained by the inverse frequency transformation process as a reconstructed image picture in a reconstructed image storage means;

a processing of removing a block distortion of the reconstructed image picture; and

a processing of injecting a pseudorandom noise into the reconstructed image picture with a block distortion removed.

34. The video encoding program according to any one of claims 31 to 33, for causing a computer to execute:

a processing of determining a pseudorandom noise injecting position based on a prediction type, a conversion block size, a quantization index or any combination thereof as extension information.

35. The video encoding program according to claim 34, for causing a computer to execute a processing of determining a reconstructed image block having a pattern with a flat prediction type, a large conversion block size and a small number of significant AC quantization indexes as a pseudorandom noise injecting position.

36. The video encoding program according to any one of claims 31 to 35, for causing a computer to inject a pseudorandom noise adjusted according to a quantization step size.

37. The video encoding program according to any one of claims 31 to 36, for causing a computer not to inject a pseudorandom noise into an image at a reference image position for intra prediction.

38. The video encoding program according to any one of claims 31 to 37, for causing a computer to generate, as a pseudorandom noise, a pseudorandom noise which is reset in a predetermined unit of video encoding.

39. A video decoding program for causing a computer to execute:

a processing of entropy-decoding a bit string to calculate a quantization index;

a processing of calculating an intra prediction signal or an inter-frame prediction signal for an image block;

a processing of inversely quantizing the quantization index to obtain a quantization representative value;

a processing of inversely converting the obtained quantization representative value to obtain a reconstructed predictive error image block;

a processing of adding an intra prediction signal or an inter-frame prediction signal to the reconstructed predictive error image block to obtain a reconstructed image block; and

a processing of determining a pseudorandom noise injecting position based on information on extension of the reconstructed image block and injecting a pseudorandom noise into an image at the pseudorandom noise injecting position.

40. The video decoding program according to claim 39, for causing a computer to execute:

a processing of storing a reconstructed image block as a reconstructed image picture in a reconstructed image storage means;

a processing of removing a block distortion of the reconstructed image picture; and

a processing of injecting a pseudorandom noise into the reconstructed image picture with a block distortion removed.

41. The video decoding program according to claim 39 or 40, for causing a computer to execute a processing of determining a pseudorandom noise injecting position based on a prediction type, a conversion block size, a quantization index or any combination thereof as extension information.

42. The video decoding program according to claim 41, for causing a computer to execute a processing of determining a reconstructed image block having a pattern with a flat prediction type, a large conversion block size and a small number of significant AC quantization indexes as a pseudorandom noise injecting position.

43. The video decoding program according to any one of claims 39 to 42, for causing a computer to inject a pseudorandom noise adjusted according to a quantization step size.

44. The video decoding program according to any one of claims 39 to 43, for causing a computer not to inject a pseudorandom noise into an image at a reference image position for intra prediction.

45. The video decoding program according to any one of claims 39 to 44, for causing a computer to generate, as a pseudorandom noise, a pseudorandom noise which is reset in a predetermined unit of video decoding.

# FIG. 1

FRAME → MB BUFFER (101) → ⊕(+/−) → FREQUENCY TRANSFORMATION UNIT (102) → QUANTIZATION UNIT (103) → ENTROPY ENCODER (104) → BIT STREAM

INVERSE QUANTIZATION UNIT (105)

INVERSE FREQUENCY TRANSFORMATION UNIT (106)

NOISE INJECTOR (113)

INTRA PREDICTION UNIT (110)

INTER-FRAME PREDICTION UNIT (111)

PICTURE BUFFER (107)

DECODE PICTURE BUFFER (109)

DEBLOCKING FILTER UNIT (108)

CODER CONTROL UNIT (112)

100

EP 2 509 317 A1

# FIG. 2

PERIPHERAL PIXEL=REFERENCE PIXEL

(A) Intra_4×4

2:DC(MEAN VALUE)

(B) PREDICTION DIRECTION

PERIPHERAL PIXEL

REFERENCE PIXEL

$a=(Y+2A+B+2)/4$
$b=(A+2B+C+2)/4$
$c=(B+2C+D+2)/4$

(C) Intra_8×8

# FIG. 3

16 × 16 BLOCK

(A) Intra_16 × 16

2:DC(MEAN), 3:Plane(PLANE)

1

0

(B) PREDICTION DIRECTION

# FIG. 4

HORIZONTAL

VERTICAL

# FIG. 5

HORIZONTAL

VERTICAL

# FIG. 6

# FIG. 7

4 × 4 DC BLOCK
(APPLY HADAMARD TRANSFORM)

4 × 4 AC BLOCK (16 BLOCKS)
(APPLY 4 × 4 INTEGER DCT)

## FIG. 8

FRAME → MB BUFFER (101)

+/− → ⊕ → FREQUENCY TRANSFORMATION UNIT (102) → QUANTIZATION UNIT (103) → ENTROPY ENCODER (104) → BIT STREAM

INVERSE QUANTIZATION UNIT (105)

INVERSE FREQUENCY TRANSFORMATION UNIT (106)

NOISE INJECTOR (113)

PICTURE BUFFER (107)

INTRA PREDICTION UNIT (110)

INTER-FRAME PREDICTION UNIT (111)

DECODE PICTURE BUFFER (109)

DEBLOCKING FILTER UNIT (108)

CODER CONTROL UNIT (112)

100

EP 2 509 317 A1

36

# FIG. 9

# FIG. 10

p3 p2 p1 p0 q0 q1 q2 q3

DEBLOCKING ⇩

P3 P2 P1 P0 Q0 Q1 Q2 Q3

UPPER NEIGHBORING MB

4×4 BLOCK

| 0 | 1 | 2 | 3 |
| 4 | 5 | 6 | 7 |
| 8 | 9 | 10 | 11 |
| 12 | 13 | 14 | 15 |

LEFT NEIGHBORING MB

TARGET MB

# FIG. 11

P3
P2
P1
P0
Q0
Q1
Q2
Q3

DEBLOCKING ⇦

p3
p2
p1
p0
q0
q1
q2
q3

UPPER NEIGHBORING MB

4×4 BLOCK

| 0 | 1 | 2 | 3 |
| 4 | 5 | 6 | 7 |
| 8 | 9 | 10 | 11 |
| 12 | 13 | 14 | 15 |

LEFT NEIGHBORING MB

TARGET MB

# FIG. 12

BLOCK EDGE BETWEEN p AND q

S101

Y ← p OR q IS IN INTRA MB? → N

S102

Y ← p AND q ARE ON MB EDGE? → N

bS=4

bS=3

S103

Y ← QUANTIZATION INDEX IS PRESENT IN p OR q? → N

bS=2

S104

Y ← IS THERE NON-CONTINUITY IN INTER-FRAME PREDICTION BETWEEN p AND q? → N

bS=1

bS=0

EP 2 509 317 A1

# FIG. 13

EP 2 509 317 A1

```
                    ┌─────────────────────────────┐
                    │  BLOCK EDGE BETWEEN p AND q  │
                    └─────────────────────────────┘
                                  │
                          S101    ▼
              Y        ╱  p OR q IS IN INTRA  ╲     N
         ┌─────────────    MB?    ─────────────────┐
         │             ╲                 ╱         │
         ▼  S102                                   ▼  S103
  Y  ╱ p AND q MAKE MB ╲  N          Y ╱ QUANTIZATION ╲  N
┌──── ╲    EDGE?    ────┐      ┌──── ╲ INDEX IS PRESENT ────┐
│      ╲            ╱   │      │      ╲   IN p OR q?  ╱      │
▼ S105A                │      ▼                              ▼ S104
N ╱ VARIATION ╲ Y      │    bS=2              Y ╱ IS THERE ╲ N
┌─╲IS SMALL BETWEEN╱─┐ │        ┌──────── ╲NON-CONTINUITY IN────┐
│  ╲  p AND q? ╱    │ │         │         ╲INTER-FRAME PREDICTION╱ │
▼      ╲    ╱       ▼ │         │          ╲ BETWEEN p AND ╱       │
bS=4            PSEUDORANDOM     │            ╲    q?    ╱          │
               NOISE MIXED bS=4  ▼ S105B      ▼                    ▼
                          N ╱ VARIATION ╲ Y  bS=1                bS=0
                        ┌──╲IS SMALL BETWEEN╱──┐
                        │   ╲  p AND q? ╱      │
                        ▼      ╲    ╱          ▼
                       bS=3              PSEUDORANDOM
                                        NOISE MIXED bS=3
```

# FIG. 14

# FIG. 15

## FIG. 16

EP 2 509 317 A1

FIG. 17

# FIG. 18

EP 2 509 317 A1

FIG. 19

# FIG. 20

EP 2 509 317 A1

# FIG. 21

(A) 4 × 4 BLOCK

(B) 8 × 8 BLOCK

(C) 16 × 16 BLOCK

# FIG. 22

RESET      RESET      RESET

· · · · ·                        · · · · · ·

t-1          t          t+1          TIME

(A) RESET PSEUDO NOISE GENERATOR PER FRAME

RESET

(B) RESET PSEUDO NOISE GENERATOR PER PLURAL MBs IN FRAME

# FIG. 23

# FIG. 24

INVERSE QUANTIZATION MEANS — 12

INVERSE FREQUENCY TRANSFORMATION MEANS — 13

NOISE INJECTION MEANS — 14

# FIG. 25

PREDICTION MEANS — 21

QUANTIZATION INDEX CALCULATION MEANS — 20

INVERSE QUANTIZATION MEANS — 22

24

RECONSTRUCTION MEANS

INVERSE FREQUENCY TRANSFORMATION MEANS — 23

NOISE INJECTION MEANS — 25

# FIG. 26

OBTAIN QUANTIZATION
REPRESENTATIVE VALUE ~ S12

OBTAIN RECONSTRUCTED
IMAGE BLOCK ~ S13

INJECT NOISE AT NOISE
INJECTING POSITION IN
RECONSTRUCTED IMAGE BLOCK ~ S14

# FIG. 27

CALCULATE PREDICTION
SIGNAL ~ S21

CALCULATE QUANTIZATION
INDEX ~ S20

OBTAIN QUANTIZATION
REPRESENTATIVE VALUE ~ S22

S24

OBTAIN RECONSTRUCTED
IMAGE BLOCK

OBTAIN RECONSTRUCTED
PREDICTIVE ERROR IMAGE
BLOCK ~ S23

INJECT NOISE AT NOISE
INJECTING POSITION IN
RECONSTRUCTED IMAGE
BLOCK ~ S25

# FIG. 28

EP 2 509 317 A1

# FIG. 29

FRAME(QCIF)

MB

X=LUMINANCE POSITION
O=COLOR DIFFERENCE POSITION

EP 2 509 317 A1

**INTERNATIONAL SEARCH REPORT**

| International application No. |
|---|
| PCT/JP2010/006343 |

A. CLASSIFICATION OF SUBJECT MATTER
*H04N7/30*(2006.01)i, *H04N7/32*(2006.01)i

According to International Patent Classification (IPC) or to both national classification and IPC

B. FIELDS SEARCHED

Minimum documentation searched (classification system followed by classification symbols)
H04N7/30, H04N7/32

Documentation searched other than minimum documentation to the extent that such documents are included in the fields searched

| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2007-508788 A (Thomson Licensing), 05 April 2007 (05.04.2007), paragraphs [0002], [0003], [0007], [0008] & WO 2005/039188 A1 & US 2007/0058866 A1 & EP 1673943 A1 & CN 1868216 A & KR 10-2006-0132813 A & MXPA 06004097 A | 1-45 |
| Y | JP 2002-204357 A (Nikon Corp.), 19 July 2002 (19.07.2002), paragraphs [0029], [0045] to [0060], [0080]; fig. 2, 4 (Family: none) | 1-45 |

| ☒ | Further documents are listed in the continuation of Box C. | ☐ | See patent family annex. |
|---|---|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 December, 2010 (21.12.10) | 28 December, 2010 (28.12.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/006343

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2007-324923 A  (Sharp Corp.),<br>13 December 2007 (13.12.2007),<br>paragraphs [0011], [0024], [0044] to [0052],<br>[0055], [0056]; fig. 4, 9 to 12<br>(Family: none) | 1-45 |
| A | JP 62-95084 A  (Sony Corp.),<br>01 May 1987 (01.05.1987),<br>page 1, right column, lines 1 to 10; page 3,<br>left column, lines 6 to 10; page 3, upper<br>right column, line 16 to lower left column,<br>line 1; page 4, upper left column, lines 7 to<br>9; page 6, left column, line 16 to right<br>column, line 1<br>(Family: none) | 1-45 |
| A | JP 6-284096 A  (Sharp Corp.),<br>07 October 1994 (07.10.1994),<br>entire text; all drawings<br>(Family: none) | 1-45 |
| A | JP 10-313458 A  (Sony Corp.),<br>24 November 1998 (24.11.1998),<br>paragraphs [0082], [0090], [0097]<br>(Family: none) | 1-45 |

Form PCT/ISA/210 (continuation of second sheet) (July 2009)

## REFERENCES CITED IN THE DESCRIPTION

**Patent documents cited in the description**

- JP 2007503166 A
- JP 2007507169 A

- JP 2009272178 A

**Non-patent literature cited in the description**

- **L. G. ROBERTS.** Picture coding using pseudorandom noise. *IRE Trans. on Information Theory,* February 1962, vol. IT-8, 145-154
- **G. CONKLIN ; N. GOKHALE.** Dithering 5-tap Filter for Inloop Deblocking. *Joint Video Team (JVT) of IOS/IEC MPEG & ITU-T VCEG, JVT-C056,* May 2002

- **CHONO et al.** A complexity Reduction Method for H.254 Intra Prediction Estimator Using the Characteristics of Hadamard Transform. *IEICE Society papers, D-11-52,* 2005